# EUROPÄISCHE PATENTANMELDUNG

(11) **EP 2 420 350 A2**
(43) Veröffentlichungstag der Anmeldung: **22.02.2012**
(21) Anmeldenummer: 11007442.4
(22) Anmeldetag: 20.10.2003
(51) Int. Cl.: B23Q 7/05, B23Q 1/00, B23B 5/12, B23B 29/24

(54) **Vorschubapparat und Maschine, insbesondere Schälmaschine**

(30) Priorität: 18.10.2002 DE 10248861; 18.10.2002 DE 10248862; 18.10.2002 DE 10248863; 18.02.2003 DE 10306831; 18.02.2003 DE 10306832; 18.02.2003 DE 10306833
(62) Teilanmeldung aus: 03773564.4
(71) Anmelder: SMS Meer GmbH, 41069 Mönchengladbach (DE)
(72) Erfinder: Greuel, Heinz-Willi, 52249 Eschweiler (DE); Gehrer, Udo, 52146 Würselen (DE); Lindbüchl, Jörg, 52156 Monschau/Konzen (DE); Jung, Ludwig, 52152 Simmerath/Lammersdorf (DE); Bartz, Alfred, 4711 Walhorn/Lontzen (DE)
(74) Vertreter: Reuther, Martin

(57) **Zusammenfassung**

Damit der Verschleiß im Bereich eines Werkzeugkopfs einer Werkzeugmaschine, insbesondere einer Schälmaschine zum Bearbeiten von sich längserstreckenden Werkstücken mit rundem Querschnitt reduziert wird, schlägt die Erfindung einen Werkzeugkopf mit im Wesentlichen radial zu einer Drehachse verstellbaren Werkzeughalter und einer im Wesentlichen axial zu der Drehachse verstellbaren Anstelleinrichtung vor, bei welcher die Werkzeughalter und die Anstelleinrichtung jeweils über ebene Gleitflächen miteinander korrespondieren.

## Beschreibung

Die Erfindung betrifft einen ein Vorschubapparat, insbesondere für eine Schälmaschine, mit Einschubrollen zum Beschleunigen von Werkstücken, insbesondere von Stäben, Rohren, Stangen, Drähten, Kabeln oder ähnlichen, vorgeschlagen, bei welchem die Einschubrollen jeweils mittels einer Einschubrollenwelle angetrieben sind. Außerdem betrifft die Erfindung eine spanabhebende Maschine, insbesondere eine Schälmaschine, zum Bearbeiten von sich längserstreckenden, insbesondere von zylindrischen und auch konischen, Werkstücken mit rundem Querschnitt.

Bekannte Schälmaschinen haben einen um eine Drehachse bzw. um eine Bearbeitungsachse rotierenden Schälkopf, der eine Anstelleinrichtung für mit dem Schälkopf umlaufende Werkzeughalter aufweist. Mittels der Anstelleinrichtung werden diese Werkzeughalter mit den daran angeordneten Werkzeugen gegenüber einem Werkstück so eingestellt, dass die Werkzeuge beispielsweise eine Zunderschicht von einem warmgewalzten Material entfernen, so dass nach der Bearbeitung des Rundmaterials als Ergebnis ein metallisch blankes Rundmaterial vorliegt.

Eine derartige Schälmaschine ist beispielsweise in der DE 101 29 207 A1 beschrieben, in welcher eine zu einer Hohlwelle verlagerbare Anstelleinrichtung im Bereich eines Schälkopfes angeordnet ist. Je nach Verlagerung der Anstelleinrichtung werden Werkzeughalter bzw. daran angeordnete Werkzeuge radial zu einer Bearbeitungsachse bewegt. Hierdurch können die Werkzeuge individuell auf einen Durchmesser eines zu bearbeitenden Grundmaterials eingestellt werden. Insbesondere an den Kontaktflächen zwischen den Werkzeughaltern und der Anstelleinrichtung liegen enorme Kräfte und damit sehr hohe Flächenpressungen vor, die beispielsweise zu einem starken Verschleiß sowohl an der Anstelleinrichtung als auch an den Werkzeughaltern führen.

Da jedoch der Austausch einer derartigen Anstelleinrichtung nur mit einem erheblichen Montageaufwand und erheblichen Kosten zu erzielen ist, liegt hierin ein erheblicher Nachteil bisheriger Schälköpfe. Gleiches gilt natürlich auch hinsichtlich des Verschleißes der Werkzeughalter, da zum Austausch derartiger Werkzeughalter eine relativ aufwändige Montage zu betreiben ist. Oftmals kommt es in diesem Zusammenhang vor, dass zum Austauschen der verschlissenen Bauteile eine komplette Demontage der Drehwerkzeugverstellung im Bereich des Schälkopfes vorgenommen werden muss. Trotz dieser offensichtlichen Nachteile wurden bis dato keine Lösungen zum Abstellen der Nachteile gefunden.

Darüber hinaus ist aus der DE 195 03 772 A1 eine Maschine zum Schälen von Rohren und Stangen bekannt. Hierbei erfolgt das Schälen durch mehrere sich um ein Schälgut drehende Schälwerkzeuge, die jeweils an stabförmigen Werkzeugträgern angeordnet sind. Die Werkzeugträger sind gegenüber einer Längsachse des Schälgutes radial verschiebbar gelagert und stützten sich unter anderem gegen die Innenseite einer Konusbuchse ab. Hierdurch werden auf die Schälwerkzeuge wirkende Kräfte, insbesondere im Wesentlichen radial gegenüber der Längsachse des Schälgutes auf die Schälwerkzeuge wirkende Kräfte, über die Werkzeugträger an die Konusbuchse und von dort weiter an ein Maschinengestell geleitet. Aber auch hier ist ein Austausch der hoch belasteten Bauteile, wie etwa der Werkzeugträger und die Konusbuchse, nur mit einem erheblichen Montageaufwand zu erreichen.

Es ist daher Aufgabe vorliegender Erfindung, die Gefahr von Verschleiß im Bereich eines Schälkopfes zu verringern, um aufwändige Montagearbeiten möglichst lang zu vermeiden.

Kumulativ bzw. alternativ wird, insbesondere für eine Schälmaschine, ein Vorschubapparat mit Einschubrollen zum Beschleunigen von Werkstücken, insbesondere von Stäben, Rohren, Stangen, Drähten, Kabeln oder ähnlichen, vorgeschlagen, bei welchem die Einschubrollen jeweils mittels einer Einschubrollenwelle angetrieben sind, wobei wenigstens eine Einschubrollenwelle exzentrisch in einer Wellenaufnahme gelagert ist. Die Einschubrollenwelle, also die antreibende Welle jeder Einschubrolle, ist hierbei vorteilhafter Weise in der Wellenaufnahme derart gelagert, dass sich die Einschubrollenwelle verlagert, wenn die Wellenaufnahme um eine ihrer Längsachsen rotiert. Hierdurch ist auf baulich besonders einfache Art und Weise ein Einstellmechanismus einer Einschubrollenwelle geschaffen, der es ermöglicht, mit einfachen Mitteln die Einschubrollenwelle aus einer ersten Lage in eine weitere Lage zu verlagern. Darüber hinaus ist die Einschubrollenwelle in einer derartigen Wellenaufnahme besonders robust und daher sehr störungsunanfällig gelagert. Durch die hierdurch erreichte verbesserte Führung insbesondere eines zu schälenden Werkstückes, entstehen wesentlich geringere Bearbeitungskräfte im Bereich des Schälkopfes, wodurch aufgabengemäß der Verschleiß im Bereich des Schälkopfes verringert wird.

Derartige Vorschubapparate bzw. derartig ausgestaltete Einschubrollen, insbesondere zum Beschleunigen von Werkstücken, wie etwa von Stäben, Rohren, Stangen, Drähten, Kabeln oder ähnlichem, entlang einer Bearbeitungsachse einer Förderstrecke, bei welchem die Einschubrollen jeweils mittels einer Einschubrollenwelle angetrieben sind, sind deshalb auch unabhängig von den übrigen Merkmalen vorliegender Erfindung vorteilhaft.

Vorschubapparate an sich sind bereits aus dem Stand der Technik bekannt und werden vorzugsweise zum Beschleunigen und Befördern von Werkstücken im Zusammenhang mit einer Beschickung von Werkstückbearbeitungsanlagen eingesetzt, die das Werkstück, wie beispielsweise ein Stangenmaterial, anschließend kontinuierlich bearbeiten. Solche Vorschubapparate werden insbesondere auch im Umfeld von Schälmaschinen eingesetzt, wobei die Einschubrollen zum Beschleunigen des Werkstücks und zum Vorwärtstransportieren des Werkstücks zu der bzw. in die Schälmaschine dienen. Hierbei sind die Einschubrollen, insbesondere bei kleineren Werkstückdurchmessern, oft um einen Winkel gegenüber einer Bearbeitungsachse des Werkstückes versetzt. Durch die hierbei erzielte Schrägstellung der Einschubrollen wird das Werkstück in Rotation versetzt, wodurch sich das Schälergebnis an dem Werkstück in der Regel verbessert. Zusätzlich rollt das Werkstück auch nach dem Schälvorgang um seine Rotationsachse, was im Einzelfall für den weiteren Bearbeitungsprozess vorteilhaft ist. Dagegen minimiert ein Geradestellen der Rollen beim Schälen von Werkstücken mit größeren Durchmessern, wie bereits aus dem Stand der Technik bekannt, unter anderem den Verschleiß der Einschubrollen. Dass eine Schälmaschine nicht nur Werkstücke mit ein und demselben Durchmesser sondern darüber hinaus unterschiedliche Werkstücke mit verschiedenen Durchmessern bearbeitet, ist aus dem Stand der Technik ebenfalls bekannt. Deshalb werden die Einschubrollen einer Schälmaschine bzw. eines Vorschubapparates oft mittels einer Verstellmechanik auf den jeweiligen Durchmesser des zu bearbeitenden Werkstückes individuell eingestellt. Jedoch haben diese bekannten Verstellmechanismen den Nachteil, dass sie gegenüber Verschmutzungen sehr anfällig sind, so dass es oftmals beim Einstellen der Einschubrollen zu Ungenauigkeiten kommt, welche die Gefahr erhöhen, dass aufgrund des Verschmutzungsgrades ein nicht mehr zu vertretendes Produktionsergebnis erzielt wird. Darüber hinaus besteht die Gefahr, dass die bekannten Verstellmechanismen anbacken und so nicht bzw. nur unter Aufwand präzise verstellt werden können. Bei den bekannten Verstellmechaniken kommt es deshalb immer wieder zu kritischen Produktionsparametern und darüber hinaus ist das Reinigen bzw. die Wiederinbetriebnahme bekannter Verstellmechaniken meistens sehr aufwendig. Durch die exzentrische Einschubrollenwelle können diese Nachteile beseitigt werden.

Damit die Einschubrollenwelle auf einfache Art und Weise durch die Wellenaufnahme verlagert werden kann, ist es vorteilhaft, wenn die Wellenaufnahme um eine Wellenaufnahmeachse drehbar gelagert und vorzugsweise im Wesentlichen rotationssymmetrisch ist. Eine derartige Lagerung ist besonders unanfällig gegenüber Verschmutzungen, so dass ein derartiger Einstellmechanismus sehr wartungsfreundlich ist. Darüber hinaus ist diese Verstellmöglichkeit besonders preiswert herzustellen. Durch eine derartige Wellenaufnahme wird eine besonders vorteilhafte Einschubrollenwellenlagerung geschaffen.

Eine bevorzugte Ausführungsvariante sieht vor, dass die Wellenaufnahme eine Lagerbuchse ist, und die Lagerbuchse rotierbar um eine ihrer Längsachsen, vorzugsweise um ihre mittlere Längsachse, in einer Halterung angeordnet ist. Hierdurch ergibt sich zum einen ein baulich besonders robuster und zum anderen ein baulich besonders kompakter Einstellmechanismus, um die Einschubrollen individuell auf das jeweilig zu bearbeitende Werkstück einzustellen.

Kumulativ bzw. alternativ hat sich als vorteilhaft herausgestellt, dass ein sich verlagernder Lagerkörper mit einer Lagerung für die Einschubrollenwelle, wie etwa die hier besprochene Wellenaufnahme, für eine Verlagerung der Einschubrollenwelle vorzugsweise derart an einer Halterung geführt ist, dass die Lagerung der Einschubrollenwelle eine Bewegung mit einer Rotationskomponente um eine Komponentenachse ausführt, die in einer Ebene liegt, die parallel zum Werkstück angeordnet ist und von der Hauptandruckrichtung, in welcher die jeweilige Einschubrolle auf das Werkstück wirkt, durchstoßen wird. Insofern dreht die Lagerung der Einschubrollenwelle zumindest um eine Achse, die windschief bezüglich der Hauptandruckrichtung angeordnet ist bzw. die eine zur Hauptandruckrichtung parallele Achse schneidet.

Durch diese Abweichung von der Hauptandruckrichtung sind die Andruckkräfte für das Werkstück einerseits und die Haltekräfte für die Lagerung getrennt voneinander ausgerichtet, und es kann so unter anderem wesentlich weniger zu einem Anbacken kommen.

Vorzugsweise ist die Drehachse der Einschubrollenwelle gegenüber der Rotationsachse der Wellenaufnahme derart angeordnet, dass bei einer Rotation der Wellenaufnahme die Drehachse der Einschubrollenwelle einen Kegel im Raum beschreibt.

Vorteilhaft ist es hierbei, wenn der Kegel eine Spitze aufweist, die sich im Wesentlichen in einem Schnittpunkt der Drehachse der Einschubrollenwelle und einer Senkrechten der Bearbeitungsebene, vorzugsweise sich im Wesentlichen in einem Schnittpunkt der Drehachse der Einschubrollenwelle und der Bearbeitungsebene, befindet. Hierbei wird die Bearbeitungsebene durch die Bearbeitungsachse und die Hauptandruckrichtung aufgespannt. Insbesondere, wenn die Spitze des Kegels sich in einem Schnittpunkt der Drehachse der Einschubrollenwelle und der Bearbeitungsebene befindet, werden besonders geringe Lagerkräfte erzeugt, die auf den Einstellmechanismus, insbesondere auch auf die Wellenaufnahme, wirken.

Um die Einschubrollenwelle gegenüber dem Werkstück in unterschiedlichen Winkeln anstellen zu können, ist es vorteilhaft, wenn die Drehachse der Einschubrollenwelle und die Rotationsachse der Wellenaufnahme einen Winkel miteinander einschließen. Hierdurch wird erreicht, dass die Drehachse der Einschubrollenwelle bei Rotation der Wellenaufnahme um deren Rotationsachse eben diesen Kegel beschreibt und die Einschubrollen gegenüber einem Werkstück bzw. der Bearbeitungsachse der Förderstrecke in verschiedenen Positionen angestellt werden können. In diesem Zusammenhang wurde ermittelt, dass es vorteilhaft ist, wenn die Rotationsachse der Wellenaufnahme schräg zu einer Senkrechten der Bearbeitungsachse der Förderstrecke angeordnet ist.

Eine Lagerung der Einschubrollenwelle an der Wellenaufnahme, mit welcher die vorstehend beschriebenen Möglichkeiten erzielt werden können, ist baulich besonders einfach gestaltet, wenn die Wellenaufnahme eine Bohrung zur Aufnahme einer Einschubrollenwelle aufweist und die Bohrung schräg zu der Rotationsachse der Wellenaufnahme angeordnet ist.

Damit die Drehachse der Einschubrollenwelle bei einer Rotation der Wellenaufnahme, wie erläutert einen Kegel beschreibt, weist die Wellenaufnahme vorzugsweise eine Bohrung auf, deren Eingangs- und Ausgangsöffnung unterschiedliche Abstände zu der Rotationsachse der Wellenaufnahme aufweisen.

Um die Kegelspitze möglichst nahe in dem Bereich der Bearbeitungsachse anordnen zu können, ist es vorteilhaft, wenn eine Öffnung der Bohrung der Wellenaufnahme an der der Einschubrollen zugewandten Stirnseite der Wellenaufnahme näher an der Rotationsachse der Wellenaufnahme angeordnet ist als eine Öffnung der Bohrung an der Einschubrollen abgewandten Stirnseite der Wellenaufnahme.

Um die Bauteilmenge des Einstellmechanismusses möglichst gering zu halten, ist es vorteilhaft, wenn die Wellenaufnahme einen selbsthemmenden Antrieb aufweist. Mittels des selbsthemmenden Antriebes kann die Wellenaufnahme sehr genau angesteuert werden und es werden darüber hinaus zum Feststellen der Wellenaufnahme keine zusätzlichen Mittel, wie beispielsweise Brems- oder Halteeinrichtungen benötigt, da der selbsthemmende Antrieb die Wellenaufnahme baulich besonders einfach in ihrer gewünschten Betriebsposition fixiert.

Um einen derartigen selbsthemmenden Antrieb baulich weiter zu vereinfachen, ist es vorteilhaft, wenn der selbsthemmende Antrieb ein selbsthemmendes Schraubengetriebe bzw. Schneckengetriebe und/oder einen hydraulischen Stellmotor aufweist.

Um die Vorteile der vorstehend beschriebenen spanabhebenden Maschine, insbesondere des vorstehend beschriebenen Vorschubapparates, in der Praxis vorteilhaft umsetzen zu können, ist hierzu ein dementsprechendes Verfahren zum Einstellen einer Einschubrolle eines Vorschubapparates gegenüber einer Bearbeitungsachse einer Förderstrecke vorgeschlagen, bei welchem eine Drehachse der Einschubrollenwelle verlagert wird, indem eine Lagerbuchse, in welcher die Einschubrollenwelle gelagert ist, um die Rotationsachse der Lagerbuchse gedreht wird, und die Rotationsachse der Lagerbuchse zumindest eine Komponente parallel zur Drehachse der Einschubrollenwelle aufweist. Hierdurch ist ein besonders sicheres und besonders wartungsarmes Verfahren zum Einstellen einer Einschubrolle gegenüber einem linear bewegten Werkstück realisiert. Insbesondere hinsichtlich der parallelen Komponente können die notwendigen Anstellkräfte wesentlich einfacher und besser beherrscht werden.

Es ist besonders vorteilhaft, wenn beim Rotieren der Lagerbuchse die Drehachse der Einschubrollenwelle um die Rotationsachse der Lagerbuchse taumelt. Durch eine derartige Bewegung kann eine Einschubrolle individuell auf die jeweiligen Bedürfnisse besonders einfach eingestellt werden.

Eine bevorzugte Verfahrensvariante sieht vor, dass beim Rotieren der Lagerbuchse zwischen der Drehachse der Einschubrollenwelle und der Bearbeitungsachse der Förderstrecke ein Winkel zwischen 0° und 10°, vorzugsweise ein Winkel zwischen 0° und 5°, eingestellt wird. Um eine Einschubrolle zwischen Werkstücken mit einem relativ geringen Durchmesser und einem Werkstück mit einem demgegenüber relativ großen Durchmesser ausreichend gut einstellen zu können, wird in der Praxis eine Einstellmöglichkeit eines Winkels zwischen 0 und 1,25° bevorzugt angewendet.

Kumulativ oder alternativ zu den vorstehend erläuterten Merkmalen wird eine spanabhebende Maschine zum Bearbeiten von linearen Werkstücken, insbesondere von Stäben, Rohren, Stangen, Drähten, Kabeln oder ähnlichem, mit einer Vorschubeinrichtung vorgeschlagen, wobei die Vorschubeinrichtung einen trennbar mit einer Einlaufführung verbundenen Vorschubapparat aufweist, und der Vorschubapparat und die Einlaufführung mittels wenigstens einer Schnellspanneinrichtung trennbar miteinander verbunden sind.

Derartige Vorschubeinrichtungen, die eine Einlaufführung und einen Vorschubapparat aufweisen, werden bevorzugt zum Befördern von linearen Werkstücken an Anlagen, wie beispielsweise einer Schälmaschine, eingesetzt. Hierbei gewährleistet die Vorschubeinrichtung eine kontinuierliche Zufuhr eines Werkstückes für eine Anlage, indem sie ein Werkstück beschleunigt und kontinuierlich fördert. In der Regel sind bei derartigen Vorschubeinrichtungen zunächst der Vorschubapparat und dann in Vorschubrichtung anschließend die Einlaufführung vorgesehen, bevor das Werkstück in die entsprechende Anlage geführt wird. Die wesentliche Funktion der Einlaufführung besteht darin, dass von dem Vorschubapparat beschleunigte und kontinuierlich geförderte Werkstück zielgerichtet in die Anlage zu führen. Der Vorschubapparat und die Einlaufführung sind nach dem Stand der Technik oftmals fest, das heißt, unter normalen Betriebsbedingungen nicht lösbar, zu einer Einheit verbunden und können gemeinsam, beispielsweise zu Zwecken eines Werkzeugswechsels an der entsprechenden Anlage, verfahren werden. Um im Betrieb eine exakte Führung des Werkstücks zu gewährleisten, ist die Vorschubeinrichtung im Betrieb fest mit der Anlage verbunden. Nachteilig bei den bekannten Vorschubeinrichtungen ist es jedoch, dass der Vorschubapparat und die Einlaufführung eine unlösbare Einheit bilden und zumindest im Einbauzustand nicht voneinander getrennt werden können. Zum Erledigen von Arbeiten an dem Vorschubapparat und der Einlaufführung ist es notwendig, die Vorschubeinrichtung je nach Umfang der durchzuführenden Arbeiten umfassend, zumindest aber teilweise, zu demontieren. Dies erschwert insbesondere Wartungs- bzw. Instandsetzungsarbeiten, falls diese an einem Bauteil des Vorschubapparates oder der Einlaufführung notwendig werden.

Beispielsweise ist aus der DE 40 19 286 A1 eine Schälmaschine bekannt, bei der einzelne Baugruppen, wie ein Einschubaggregat und ein Führungssystem, gegenüber einem Schälmaschinengehäuse verlagerbar angeordnet sind. Hierbei ist das Einschubaggregat über eine Vielzahl an Schrauben mit dem Führungssystem verspannt. Darüber hinaus ist das Einschubaggregat und das Führungssystem gleichzeitig mittels zusätzlicher Führungsschienen an dem Schälmaschinengehäuse verspannbar gelagert. Diese Führungsschienen reichen hierbei von dem Schälmaschinengehäuse bis zum Einschubaggregat und sind derart gegenüber den Baugruppen angeordnet, dass sie diese Baugruppen parallel zu der Förderrichtung des Einschubaggregates durchdringen. An ihren Enden weisen die Führungsschienen jeweils entweder eine Kontermutter oder einen Spannkeil auf, so dass bei einem "Spannen" der Führungsschienen sowohl das Einschubaggregat, das Führungssystem als auch das Schälmaschinengehäuse miteinander verklemmt und somit miteinander verbunden werden. Nachteilig hierbei ist es zum einen, dass das Einschubaggregat nur sehr aufwändig und schwer von dem Führungssystem zu trennen ist. Dies erschwert Wartungs- und Reparaturarbeiten erheblich. Zum anderen sind die durch alle Baugruppen verlaufenden Führungsschienen nachteilig, da diesen eine relativ hohe Eigendehnung innewohnt. Dies trifft selbst dann zu, wenn die Führungsschienen aus hochwertigen Materialien gefertigt sind. Dies hat zur Folge, dass nur eine begrenzte Spannkraft zum Verklemmen der Baugruppen aufgebracht werden kann. Hierdurch haben die derart verspannten Baugruppen nur eine bedingte Steifigkeit. Dies wirkt sich wiederum negativ auf die Bearbeitungs- bzw. Schälergebnisse aus, da beim Schälen relativ hohe Bearbeitungskräfte im Bereich des Schälkopfes vorliegen, die entsprechend in ein steifes Gestell geleitet werden müssen, um die erforderliche Präzision beim Schälen eines Werkstückes zu erzielen. Die vorstehend erläuterten Nachteile werden durch vorstehend beschriebene Maschine, insbesondere Schälmaschine und durch deren Vorschubeinrichtung, behoben.

Eine Schnellspanneinrichtung, wie oben erwähnt, kann auf vielfache Weise gestaltet sein. Im allgemeinen versteht man unter der Bezeichnung "Schnellspanneinrichtung" eine Einrichtung, mit welcher unkompliziert und schnell eine Verbindung zwischen zwei Elementen hergestellt oder gelöst werden kann. Vorzugsweise ist die Schnellspanneinrichtung automatisiert, so dass ein manuelles Arbeiten mit zusätzlichen Werkzeugen überflüssig ist. Dies unterscheidet derartige Verbindungen ganz erheblich von einer einfachen Schraubverbindung, mit welcher zwei Elemente verbunden sind.

Eine bevorzugte Ausführungsvariante sieht vor, dass die Schnellspanneinrichtung wenigstens ein Keilspannelement aufweist. Keilspannelemente liegen vorteilhafter Weise als Standardprodukte vor, so dass hierdurch vorliegende Schnellspanneinrichtung kostengünstig realisiert werden kann. Darüber hinaus haben insbesondere Keilspannelemente den Vorteil, das im entriegelten Zustand der Keilspannelemente die zuvor verspannten Bauteile beliebig weit voneinander beabstandet werden können, ohne dass gegebenenfalls sonstig störende Verbindungsteile einer Spanneinrichtung zwischen den getrennten Bauteilen bestehen bleiben. Vorteilhafter Weise besteht hierdurch auch die Möglichkeit eine Verbindung zwischen dem Vorschubapparat und der Einlaufführung schnell und baulich besonders einfach herzustellen oder zu lösen.

Auf diese Weise können zum einen auch an der Einlaufführung beidseitig ohne Weiteres und besonders schnell Wartungs- bzw. Instandhaltungsarbeiten vorgenommen werden, so dass die Durchführung derartiger Arbeiten erheblich erleichtert wird, was insbesondere bei empfindlichen oder filigranen Einlaufführungen besonders vorteilhaft ist. Zum anderen braucht auch für diesbezügliche Arbeiten an dem Vorschubapparat, insbesondere am einlaufführungsseitigen Teil des Vorschubapparates kein zusätzlicher Bauraum vorgesehen sein, da die Vorschubeinrichtung vorzugsweise von einer Anlage schnell getrennt und darüber hinaus die Einlaufführung lediglich von dem Vorschubapparat getrennt und zu der Anlage zurückverfahren werden braucht, um beispielsweise den einlaufführungsseitigen Teil des Vorschubapparates problemlos zu erreichen. Mittels einer Schnellspanneinrichtung gelingt dies besonders einfach.

Zum anderen ist hierzu kumulativ oder alternativ eine spanabhebende Maschine vorgeschlagen, die eine Vorschubeinrichtung, eine Einlaufführung und ein Schälmaschinengetriebe aufweist, wobei sowohl der Vorschubapparat als auch das Schälmaschinengetriebe unabhängig voneinander mit der Einlaufführung trennbar verbunden werden können.

Unter der Bezeichnung "Schälmaschinengetriebe" versteht man in diesem Sinne im Allgemeinen einen feststehenden Grundkörper einer spanabhebenden Maschine, insbesondere einer Schälmaschine. Dieser Grundkörper ist beispielsweise ein Gestell, ein Rahmen oder ein sonstig ausgebildetes Gebilde, welches im Wesentlichen bis in den Bereich um den Schälkopf herum reicht.

Dadurch, dass die beiden Baugruppen Vorschubapparat und Schälmaschinengetriebe einzeln und vor allem unabhängig voneinander mit der Einlaufführung betriebssicher verbunden werden können, sind Arbeiten in einzelnen Sektionen einer Schälmaschine wesentlich leichter und mit weniger Aufwand durchführbar. So ist es beispielsweise möglich, Arbeiten in einem Bereich zwischen der Einlaufführung und dem Schälmaschinengetriebe durchzuführen, ohne dass es hierzu notwendig ist, auch den Vorschubapparat von der Einlaufführung zu trennen. Vielmehr kann die Einlaufführung zusammen mit dem Vorschubapparat als eine fest verbundene Baugruppe von dem Schälmaschinengehäuse gelöst und verschoben werden. Hierdurch ergeben sich ebenfalls Vorteile hinsichtlich des Unfallschutzes, da bei derartigen Arbeiten wesentlich weniger lose, verschiebbare Baugruppen gehandhabt werden müssen. Dies fördert die Reduzierung einer Unfallgefahr.

Einer der wohl größten Vorteile ist darin zu sehen, dass durch dieses unabhängige Verbinden, eine wesentlich steifere Vorschubeinrichtung als bisher zur Verfügung steht. Diese steifere Vorschubeinrichtung ist dadurch realisiert, dass zum einen der Vorschubapparat unmittelbar an der Einlaufführung angeordnet ist. Hierdurch werden Spannkräfte über sehr kurze Kraftflusswege in die zu verspannenden Baugruppen eingeleitet, wodurch weit aus starrere Verbindungen als bisher üblich realisiert sind.

Zum anderen ist vorteilhafter Weise die Einlaufführung unmittelbar mit dem Schälmaschinengetriebe trennbar verbunden. Auch hierdurch werden Spannkräfte mittels einer wesentlich starreren Verbindung in die vorliegend zu verbindenden Baugruppen eingeleitet.

Hierdurch muss je nach Anwendungsfall nicht die komplette Vorschubeinrichtung von der Anlage getrennt werden, sondern es reicht schon aus, lediglich den Vorschubapparat von der Einlaufführung zu trennen und so zu verfahren, dass die Einlaufführung ungeachtet dessen an der Anlage angeordnet bleibt. Allein aus diesen Gründen ist es vorteilhaft, wenn der Vorschubapparat und die Einlaufführung insbesondere auch im Einbauzustand relativ zueinander verlagerbar sind.

Damit darüber hinaus beim Durchführen von Arbeiten an einzelnen Bauteilen oder Baugruppen der Vorschubeinrichtung ein genügend großer Montageraum zwischen dem Vorschubapparat und der Einlaufführung zur Verfügung gestellt werden kann, kann vorteilhafter Weise zwischen dem Vorschubapparat und der Einlaufführung ein Abstand von mehr als 200 mm, vorzugsweise von mehr als 500 mm bzw. mehr als 600 mm, eingestellt werden.

Um ein Lösen von Vorschubapparat und Einlaufführung untereinander baulich besonders einfach zu gestalten, ist es vorteilhaft, wenn der Vorschubapparat und die Einlaufführung mittels einer Spanneinrichtung lösbar miteinander fixiert sind. Hierdurch lassen sich die zum Verspannen bzw. Lösen notwendigen Arbeitsschritte in ihrer Zahl und hinsichtlich ihres Zeitaufwandes möglichst gering halten.

Eine Ausführungsvariante sieht vor, dass die Spanneinrichtung wenigstens ein Rastmittel, ein Spannelement, einen Zugbolzen und/oder einen Indexbolzen aufweist.

Unter dem Begriff "Rastmittel" versteht man in diesem Zusammenhang jegliche Einrichtungen, mit denen der Vorschubapparat an der Einlaufführung oder umgekehrt zumindest vorfixiert werden kann, so dass hierbei der Vorschubapparat und die Einlaufführung zu einer Vorschubeinrichtung miteinander verbunden sind. Ein Vorfixieren erleichtert weitere Spannarbeiten, da die zu verspannen Bauteile schon einmal sicher zueinander fixiert - und gegebenenfalls schon ausreichend ausgerichtet positioniert - sind.

Der Begriff "Spannelement" umfasst beispielsweise alle Bauteile, die dazu geeignet sind, den Vorschubapparat und die Einlaufführung derart miteinander zu verbinden, dass diese, insbesondere während des Betriebs, fest, aber trennbar miteinander verbunden sind.

Derartige Spannelemente können unter anderem auch Zugbolzen beinhalten, wobei ein Zugbolzen vorzugsweise durch ein Gestell des Vorschubapparates und/oder ein Gestell der Einlaufführung hindurchgeführt ist und der Zugbolzen in der Regel an seinen Enden jeweils mit einer Schraubenmutter derart verspannt ist, dass der Vorschubapparat und die Einlaufführung zu einer betriebsicheren Vorschubeinrichtung miteinander verbunden sind.

Die Indexbolzen können darüber hinaus kumulativ bzw. alternativ als Zentrierhilfen dienen, so dass Vorschubapparat und Einlaufführung, insbesondere beim Zusammenführen, an in der Regel mehreren Stellen eine Führung erfahren. Zusätzlich sind der Vorschubapparat und die Einlaufführung durch das Vorsehen solcher Indexbolzen an einer Vielzahl von Bereichen verdrehsicher miteinander verbunden. Dementsprechend schließt der Begriff "Indexbolzen" im Sinne der Erfindung jegliche Bauteile ein, die dazu geeignet sind, den Vorschubapparat und die Einlaufführung beim Zusammenführen an mehreren Stellen gezielt, insbesondere senkrecht zum Führungsweg zu führen und darüber hinaus die zweigeteilte Vorschubeinrichtung durch zwei oder mehr Indexbolzen besonders verwindungssteif bzw. trotz der Zweiteilung ausreichend in sich stabil zu gestalten.

Um voneinander gelöste Vorschubapparate und Einlaufführungen problemlos und gezielt gegenüber sich selbst, aber auch gegenüber einer Werkstückbearbeitungsanlage, zu verfahren, sieht eine bevorzugte Ausführungsvariante vor, dass sowohl der Vorschubapparat als auch die Einlaufführung entlang einer Linearführung verfahrbar gelagert sind. An einer derartigen Linearführung sind der Vorschubapparat und die Einlaufführung besonders sicher gelagert und können sehr exakt und schnell zueinander verfahren werden. Es versteht sich, dass eine derartige Linearführung auch unabhängig von den übrigen Merkmalen vorliegender Erfindung vorteilhaft ist.

In einer konkreten Umsetzung ist es möglich, dass die Einlaufführung einen verwindungssteifen Kasten aufweist, der vorzugsweise über Laufschuhe mit der Linearführung kommuniziert. Es versteht sich, dass ein derartiger Kasten besonders verwindungssteif ist, wenn er geschlossen ist. Durch einen derartigen Kasten ist eine besonders kompakte Einheit geschaffen, die darüber hinaus besonders gut mit dem Vorschubapparat, aber auch mit einer Werkstückbearbeitungsanlage, verbunden werden kann. Die Laufschuhe des verwindungssteifen Kastens ermöglichen dann eine exakte Führung an der Linearführung. Darüber hinaus ist der verwindungssteife Kasten mittels der Laufschuhe und einer am Untergrund befestigten Linearführung vorteilhaft sehr stabil mit einem Untergrund verbunden.

Dementsprechend ist es ebenfalls vorteilhaft, wenn der Vorschubapparat einen verwindungssteifen Rahmen aufweist, der vorzugsweise über Laufschuhe mit einer Linearführung kommuniziert. Hierbei ergeben sich ebenfalls die bereits hinsichtlich des verwindungssteifen Kastens der Einlaufführung erläuterten Vorteile. Derartige verwindungssteife Rahmen für Vorschubapparat bzw. Einlaufführung sind auch unabhängig von den übrigen Merkmalen vorliegender Erfindung vorteilhaft.

Um den Vorschubapparat und/oder die Einlaufführung ohne großen manuellen Kraftaufwand verlagern zu können, ist es vorteilhaft, wenn der Vorschubapparat und/oder die Einlaufführung Mittel zum Verfahren aufweisen. Ein derartiges Mittel zum Verfahren ist beispielsweise ein Hydraulikzylinder, der den Vorschubapparat entlang einer Linearführung bewegt. Ebenso kann die Einlaufführung mit einem solchen Hydraulikzylinder bewegt werden. Aber auch mittels einer handbetätigten Kurbel und einer entsprechenden günstigen Getriebeübersetzung können der Vorschubapparat und/oder die Einlaufführung leicht zueinander oder zu einer Schälmaschine verfahren werden.

Des Weiteren ist auch eine Anlage, wie etwa eine Schälmaschine, zum Bearbeiten von linearen Werkstücken, insbesondere von Stäben, Rohren, Stangen, Drähten, Kabeln oder ähnlichem, vorgeschlagen, wobei die Anlage eine vorstehend beschriebene Vorschubeinrichtung aufweist. Insbesondere kommen die Vorzüge der vorliegenden Vorschubeinrichtung im Zusammenhang mit einer Schälmaschine besonders vorteilhaft zur Geltung. Der Vollständigkeit halber sei gleich an dieser Stelle erwähnt, dass die Merkmale hinsichtlich der Anlage zum Bearbeiten von entsprechenden Werkstücken mit einer derartigen Vorschubeinrichtung auch ohne die übrigen Merkmale der Erfindung vorteilhaft sind.

Durch den Einsatz der vorliegenden Vorschubeinrichtung an einer Maschine werden bekannte Werkstückbearbeitungsanlagen, wie beispielsweise Schälmaschinen, wesentlich verbessert, da an sich der Zeitraum eines Stillstandes einer Werkstückbearbeitungsanlage, zum Beispiel beim Durchführen von Wartungs- oder Instandsetzungsarbeiten, wesentlich verkürzen lässt.

Besonders vorteilhaft ist es, wenn die gesamte Vorschubeinrichtung oder Teile davon mit der übrigen Werkstückbearbeitungsanlage trennbar verbunden ist bzw. sind. Hierdurch können Wartungs-und Instandsetzungsarbeiten wesentlich einfacher und damit schneller durchgeführt werden, da die Vorschubeinrichtung im Einbauzustand, wie bereits erläutert, in einen "ersten Teil" aus Vorschubapparat und in einen " weiteren Teil" aus Einlaufführung getrennt und die beiden "Teile" einzeln oder gemeinsam verfahren werden können.

Es hat sich gezeigt, dass es darüber hinaus vorteilhaft ist, wenn die Werkstückbearbeitungsanlage eine Linearführung aufweist, auf welcher ein Vorschubapparat und/oder eine Einlaufführung unabhängig voneinander verlagerbar angeordnet sind. Hierdurch können der Vorschubapparat und die Einlaufführung individuell zueinander sowie individuell gegenüber der übrigen Werkstückbearbeitungsanlage relativ schnell und betriebssicher verfahren werden kann.

Eine besonders bevorzugte Ausführungsvariante sieht vor, dass die Linearführung derart ausgebildet ist, dass zwischen dem Vorschubapparat oder der Einlaufführung und der übrigen Werkstückbearbeitungsanlage ein Abstand von jeweils mehr als 200 mm, vorzugsweise von mehr als 500 mm, einstellbar ist. Durch derartige Abstände untereinander ist ein ausreichend großer Montageraum gewährleistet, so dass problemlos an dem Vorschubapparat oder an der Einstellführung sowie auch an dem einstellführungsseitigen Teil der übrigen Werkstückbearbeitungsanlage gearbeitet werden kann, ohne dass die Gesamtanordnung zuviel Bauraum benötigt. Dieses kann insbesondere dann gewährleistet werden, wenn die Linearführung in einen Untergrund integriert ausgebildet ist.

Darüber hinaus ist es vorteilhaft, wenn die Vorschubeinrichtung oder Teile davon mittels einer Spanneinrichtung an der übrigen Werkstückbearbeitungsanlage lösbar fixiert sind. Hierdurch kann die gesamte Vorschubeinrichtung an der übrigen Werkstückbearbeitungsanlage vorteilhaft lösbar fixiert werden. Die Anordnung baut besonders einfach und kostengünstig, falls die Spanneinrichtung zwischen Vorschubapparat und Einlaufführung und die Spanneinrichtung zwischen Vorschubeinrichtung und der übrigen Werkstückbearbeitungsanlage identisch sind.

In diesem Zusammenhang ist es ebenfalls vorteilhaft, wenn die Spanneinrichtung wenigstens ein Rastmittel, ein Spannelement, einen Zugbolzen und/oder einen Indexbolzen aufweist.

An dieser Stelle ist anzumerken, dass die Merkmale hinsichtlich der Vorschubeinrichtung auch ohne die weiteren Merkmale vorliegender Erfindung vorteilhaft sind.

Kumulativ bzw. alternativ ist darüber hinaus ein Verfahren zum Durchführen von Arbeiten an einer Vorschubeinrichtung einer Anlage vorgeschlagen, bei welchem ein Vorschubapparat und eine Einlaufführung voneinander getrennt und derart relativ zueinander verfahren werden, dass zum einen zwischen der Einlaufführung und dem Vorschubapparat und gegebenenfalls zum anderen zwischen diesen und der übrigen Anlage ein Montageraum entsteht.

Es hat sich gezeigt, dass die Merkmale eines derartigen Verfahrens zum Durchführen von Arbeiten an einer Vorschubeinrichtung einer Anlage auch unabhängig von den anderen beschriebenen Merkmalen der Erfindung vorteilhaft ist.

Ein derartiges Verfahren wirkt sich insbesondere erleichternd auf Wartungs- und Instandsetzungsarbeiten einer Vorschubeinrichtung aus, so dass im Falle derartiger Arbeiten eine Anlage, wie etwa eine Schälmaschine, wesentlich schneller wieder einsetzbar ist. Bisher konnten Teile einer Vorschubeinrichtung nicht schnell relativ zueinander verfahren werden, sondern die herkömmlichen Vorschubeinrichtungen mussten aufwendig demontiert werden.

Besonders einfach und schnell kann ein derartiges Verfahren der einzelnen Bauteile erfolgen, wenn der Vorschubapparat und/oder die Einlaufführung der Vorschubeinrichtung entlang einer Führung, vorzugsweise entlang einer Linearführung, verfahren werden.

Die Aufgabe der Erfindung wird auch von einem Werkzeugkopf mit im Wesentlichen radial zu einer Drehachse verstellbaren Werkzeughaltern und einer im Wesentlichen axial zu der Drehachse verstellbaren Anstelleinrichtung gelöst, bei welcher die Werkzeughalter und die Anstelleinrichtung jeweils über Gleitflächen miteinander korrespondieren und die Gleitflächen im Wesentlichen eben sind. Im Gegensatz zu bisher konisch ausgeführten Gleitflächen bekannter Anstelleinrichtungen und hiermit korrespondierenden Werkzeughaltern weisen diese Anstelleinrichtung und dieser Werkzeughalter im Wesentlichen ebene Gleitflächen auf, worüber sie miteinander korrespondieren und insbesondere radial zu der Drehachse wirkende Bearbeitungskräfte von den Werkzeughaltern in die Anstelleinrichtung geleitet werden.

In völliger Abkehr vom Stand der Technik verzichtet somit diese Umsetzung auf einen Konus für die Anstelleinrichtung in den Bereichen, in denen die wesentlichen Anstellkräfte auftreten. Stattdessen werden in diesen Bereichen Ebenen verwandt, sodass die Kontaktflächen von der Anstellung im Wesentlichen unabhängig sind.

Hierdurch wird erfindungsgemäß die Gefahr verringert, dass es zwischen den Gleitflächen lediglich zu einer linienartigen Berührung kommt und hierdurch nur ein geringer Bereich der korrespondierenden Gleitflächen Kräfte aufnimmt und überträgt, wodurch dieser geringe Bereich verständlicherweise enormen Belastungen ausgesetzt ist. Durch die im Wesentlichen ebene Gleitfläche wird eine besonders gute Kraftverteilung erzielt, so dass im Bereich der ebenen Gleitflächen auftretende Flächenpressungen in der Regel vollständig von der gesamten Gleitfläche aufgenommen werden können.

Dies führt zu einer wesentlich erhöhten Lebensdauer des erfindungsgemäßen Werkzeugkopfs gegenüber herkömmlichen Werkzeugköpfen.

Im Sinne der Erfindung versteht man unter dem Begriff "eben" oder "ebene Gleitfläche" im Wesentlichen Flächen, die dazu geeignet sind, eine Gleitfläche darzustellen und im Wesentlichen ungekrümmt sind, so dass die Gefahr verringert ist, dass zwei miteinander korrespondierende ebene Gleitflächen nur linienhaft aneinander berühren. Mit der ebenen Gleitfläche sind insbesondere im Rahmen der üblichen Messgenauigkeit plane Flächen gemeint, die untereinander möglichst großflächig in Kontakt stehen können.

Durch ebene Gleitflächen lässt sich ein Verschleiß besonders kostengünstig vermeiden. Andererseits kann auch eine gekrümmte Fläche, die parallel zur Drehachse einen konstanten Krümmungsradius aufweist, diese Vorteile bringen, da auch bei einer derartigen Anordnung sich der Krümmungsradius der Gleitfläche nicht über den Verstellweg ändert, wie dieses bei konischen Flächen der Fall wäre. Grundlegender Erfindungsgedanke ist somit, eine Gleitfläche vorzusehen, deren Krümmungsradius sich entlang des Verlagerungsweges der Werkzeughalter bezüglich der Anstelleinrichtung nicht verändert, wobei eine ebene Gleitfläche auch als eine Gleitfläche mit unendlichem Krümmungsradius angesehen werden kann.

Eine besonders hohe Lebenserwartung haben die Anstelleinrichtung und die Werkzeughalter des erfindungsgemäßen Werkzeugkopfs, wenn die Gleitflächen zusätzlich noch gehärtet sind.

Insbesondere in diesem Zusammenhang sieht eine Ausführungsvariante vor, dass wenigstens eine Gleitfläche ein Inlay aufweist, welches vorzugsweise aus einem verschleißfesten Material hergestellt ist. Bei Bedarf kann ein derartiges Inlay schnell und kostengünstig ausgewechselt werden. Zwar können, darüber hinausgehend, einzelne ebene Bereiche der überwiegend konisch gestalteten Anstelleinrichtung, wie erwähnt, gehärtet sein. Dies ist jedoch sehr teuer, so dass mit den Inlays wesentlich kostengünstiger und damit auch wirtschaftlich sinnvoller verschleißfeste, ebene Gleitflächen bereitgestellt werden.

Darüber hinaus ist es vorteilhaft, wenn das Inlay ein Hartmetallplättchen ist. Hierdurch lassen sich die Produktionskosten der Anstelleinrichtung der Werkzeughalter weiter reduzieren, da die übrigen Bauteile nicht noch zusätzlich einem Oberflächenhärtungsverfahren unterzogen werden müssen. Dies senkt ebenfalls die Herstellungskosten weiter. Durch den Einsatz eines Hartmetallplättchens zum Realisieren einer ebenen Gleitfläche ist es vorteilhafter Weise möglich, ein Normteil zum Bilden einer ebenen Gleitfläche, welches als Massenprodukt besonders kostengünstig herstellbar ist, zu verwenden.

Durch das Verwenden eines Inlays aus einem verschleißfesten Material werden zum einen die guten Dämpfeigenschaften des weicheren Bauteils -Anstelleinrichtung und Werkzeughalter - beibehalten und zum anderen eine verschleißfeste Bauteiloberfläche - Inlay - geschaffen. Somit sind die Anstelleinrichtung sowie die Werkzeughalter besonders gut gegen einen frühzeitigen Verschleiß geschützt und darüber hinaus können die Anstelleinrichtung und die Werkzeughalter nach wie vor mechanische Stöße gut abdämpfen ohne Gefahr zu laufen, dass sie hierdurch frühzeitig Schaden nehmen.

Besonders vorteilhaft ist es, wenn das Inlay austauschbar an der Anstelleinrichtung und/oder an den Werkzeughaltern fixiert ist. Es versteht sich, dass ein derartiges Inlay durch vielfältige Weise an der Anstelleinrichtung bzw. an den Werkzeughaltern angeordnet werden kann. Beispielsweise können die Inlays geklebt werden. Es ist auch vorteilhaft, wenn die Inlays mittels einer Schraubverbindung, beispielsweise mit vier Zylinderkopfschrauben, lösbar und austauschbar an der Anstelleinrichtung und/oder an den Werkzeughaltern befestigt sind.

Insbesondere hinsichtlich geschraubter Inlays besteht die Möglichkeit verschlissene Inlays durch neue Inlays zu ersetzen, ohne dabei die Anstelleinrichtung bzw. die Werkzeughalter komplett austauschen zu müssen. Hierdurch wird weitestgehend eine Demontage des Werkzeugkopfs vermieden.

Eine besondere Ausführungsvariante sieht vor, dass die Anstelleinrichtung im Übrigen eine Konusbuchse aufweist. Eine Konusbuchse ist gut dazu geeignet entlang einer Welle axial verlagert zu werden und darüber hinaus mittels ihrer konischen Baugruppen andere Bauteile radial zu der Welle zu verschieben. Insofern lassen sich für andere Bauteile die Vorteile einer Konusbuchse genutzt werden, während ansonsten durch die erfindungsgemäßen Gleitflächen der Verschleiß an den hoch belasteten Flächen vermindert wird.

Vorzugsweise ist die Konusbuchse ein Verstellring. Hierdurch ist baulich besonders einfach eine Anstelleinrichtung geschaffen, die zudem relativ zu einer Hohlwelle verlagerbar ist.

Damit eine Gleitfläche einer Anstelleinrichtung und eine Gleitfläche eines korrespondierenden Werkzeughalters möglichst großflächig miteinander in Wirkkontakt stehen, ist es vorteilhaft, wenn eine ebene Gleitfläche der Anstelleinrichtung im Wesentlichen parallel zu einer korrespondierenden Gleitfläche eines Werkzeughalters, vorzugsweise einer ebenen Gleitfläche eines Werkzeughalters, angeordnet ist. Durch eine gute Parallelität zwischen den beiden Gleitflächen liegt ein besonders guter Wirkkontakt und eine gute Kraftverteilung bzw. entsprechend niedrige Flächenpressung über einen möglichst großen Bereich der Gleitflächen vor.

Die Aufgabe der Erfindung wird auch von einem Verstellring zum Anstellen eines Werkzeughalters gegenüber einer Drehachse gelöst, wobei der Verstellring eine konisch ausgebildete Innenseite zum Bilden einer Gleitlagerschalenfläche aufweist und die konische Gleitlagerschalenfläche wenigstens einen im Wesentlichen ebenen Gleitlagerbereich aufweist.

Dementsprechend ist es besonders vorteilhaft, wenn die Innenseite des Verstellrings zumindest in Teilbereichen, insbesondere im Bereich der Gleitflächen, eben ausgebildet ist. Hierdurch kann eine Kraftübertragung zwischen dem Verstellring und einem Werkzeughalter großflächig stattfinden, wodurch die Belastung der Bauteile in diesen Bereichen erheblich verringert ist.

Durch den Verstellring kann zum einen die rotationssymmetrische Gleitfläche genutzt werden, die es ermöglicht, den Verstellring auch weiterhin relativ gegenüber einer Hohlwelle baulich besonders einfach zu verlagern. Andererseits ist der erfindungsgemäße Verstellring wesentlich resistenter gegenüber einem Verschleiß an den besonders hoch belasteten Bereichen, in welchen der Verstellring an seinen erfindungsgemäßen Gleitflächen mit dem Werkzeughalter in Wirkkontakt tritt. Hierdurch wird die Lebensdauer des Verstellrings erheblich erhöht.

Besonders vorteilhaft ist es, wenn der ebene Gleitlagerbereich lösbar und austauschbar an dem Verstellring befestigbar ist. Dies ermöglicht es, dass bei einem dennoch verschlissenen Gleitlagerbereich nicht gleich der komplette Verstellring ausgetauscht werden muss, sondern lediglich partiell im Bereich der Gleitlagerflächen ein Austausch stattfinden muss. Dies reduziert unter anderem die Instandhaltungskosten, da der Verstellring an sich erheblich länger eingesetzt werden kann.

Baulich besonders einfach ist eine verschleißfeste Gleitlagerschalenfläche realisiert, wenn der Gleitlagerbereich ein Inlay aufweist, welches härtere Materialeigenschaften als der Verschleißring aufweist. Vorzugsweise ist dieses Inlay ein Normteil, welches in der Massenproduktion hergestellt wird. Es versteht sich, dass das Inlay wesentlich einfacher zu härten ist als dies hinsichtlich einer Innenseite einer Gleitlagerschalenfläche eines Verstellrings möglich ist.

Darüber hinaus wird die Aufgabe der Erfindung von einer spanabhebenden Werkzeugmaschine, insbesondere von einer Schälmaschine, zum Bearbeiten von linearen Werkstücken gelöst, die einen Werkzeugkopf und/oder einen Verstellring zum Anstellen eines Werkzeughalters mit wenigstens einem der vorstehend beschriebenen Merkmale aufweist.

Weitere Vorteile, Ziele und Eigenschaften vorliegender Erfindung werden anhand nachfolgender Erläuterung anliegender Zeichnung beschrieben, in welcher beispielhaft zwei Werkzeugköpfe und Schälmaschinen mit weiteren Baugruppen dargestellt sind.

Es zeigt
- Figur 1: eine Schälmaschine im Bereich eines Werkzeugkopfes, insbesondere eines Schälkopfes, und einer Vorschubeinrichtung mit einem Vorschubapparat und einer Einlaufführung,
- Figur 2: die Schälmaschine aus der vorhergehenden Figur 1, bei welcher sowohl der Vorschubapparat von der Einlaufführung als auch die Einlaufführung von dem Schälmaschinengetriebe getrennt ist,
- Figur 3: schematisch eine Ansicht der Einlaufführung mit Keilspannelementen in Transportrichtung eines Schälwerkstückes,
- Figur 4: schematisch eine Ansicht des Schälmaschinengetriebes mit Keilspannelementen in Transportrichtung eines Schälwerkstückes,
- Figur 5: schematisch eine Draufsicht auf die mit dem Vorschubapparat verspannten Einlaufführung,
- Figur 6: schematisch eine weitere Schälmaschine mit einer von einem Schälmaschinengetriebe getrennten Einlaufführung und einem von der Einlaufführung getrennten Vorschubapparat, wobei sowohl die Einlaufführung als auch der Vorschubapparat an einer Linearführung gelagert ist,
- Figur 7: schematisch eine Vorschubeinrichtung mit dem zuvor von der Einlaufführung getrennten Vorschubapparat der Schälmaschine aus der Figur 6,
- Figur 8: eine perspektivische Ansicht eines ersten Werkzeugkopfes einer der vorstehend erwähnten Schälmaschinen,
- Figur 9: eine teilweise geschnittene Ansicht eines weiteren Werkzeugkopfes, welcher um ein zu schälendes Werkstück rotiert,
- Figur 10: eine erfindungsgemäße Anordnung einer Lagerbuchse und einer darin angeordneten Einschubrollenwelle einschließlich eines Einschubrollenwellenmotors,
- Figur 11: schematisch eine Darstellung einer Winkelverstellung einer Einschubrollenwelle mit einer dementsprechenden Lagerbuchse gegenüber einer Bearbeitungsachse einer Förderstrecke und
- Figur 12: schematisch eine perspektivische Ansicht eines Vorschubapparates mit vier Einschubrollenwellen.

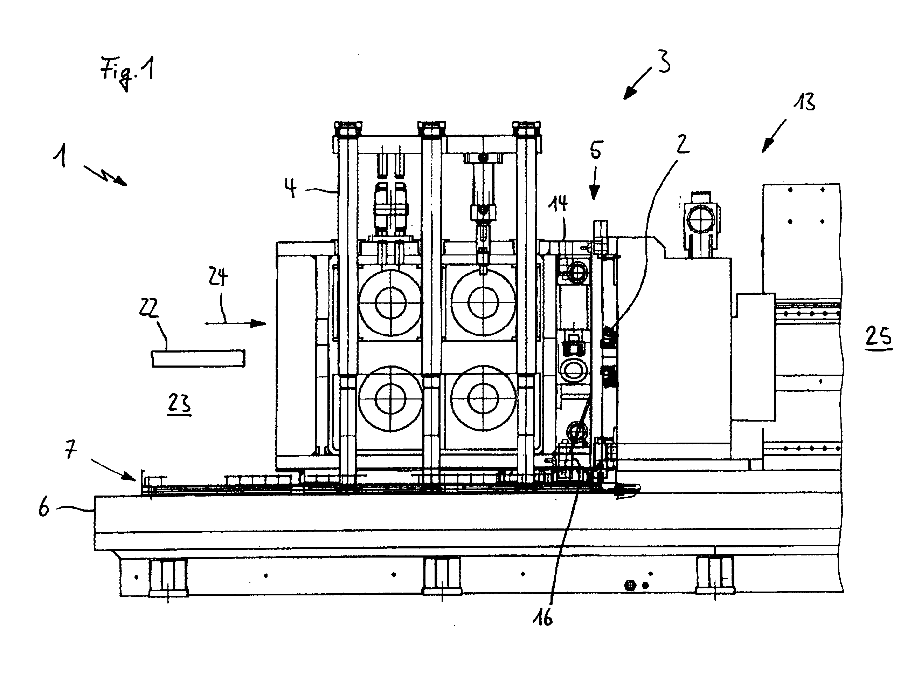

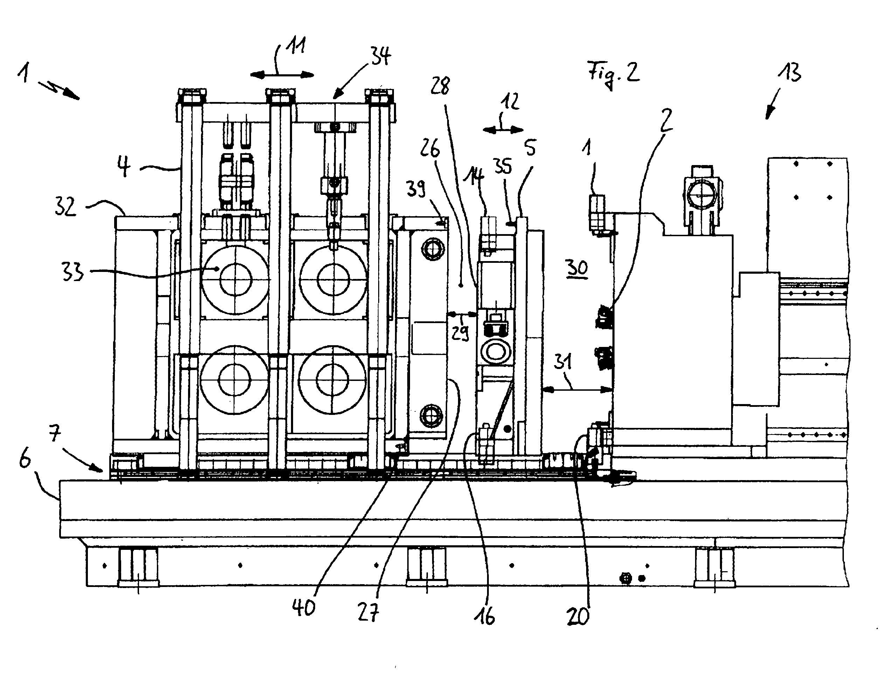

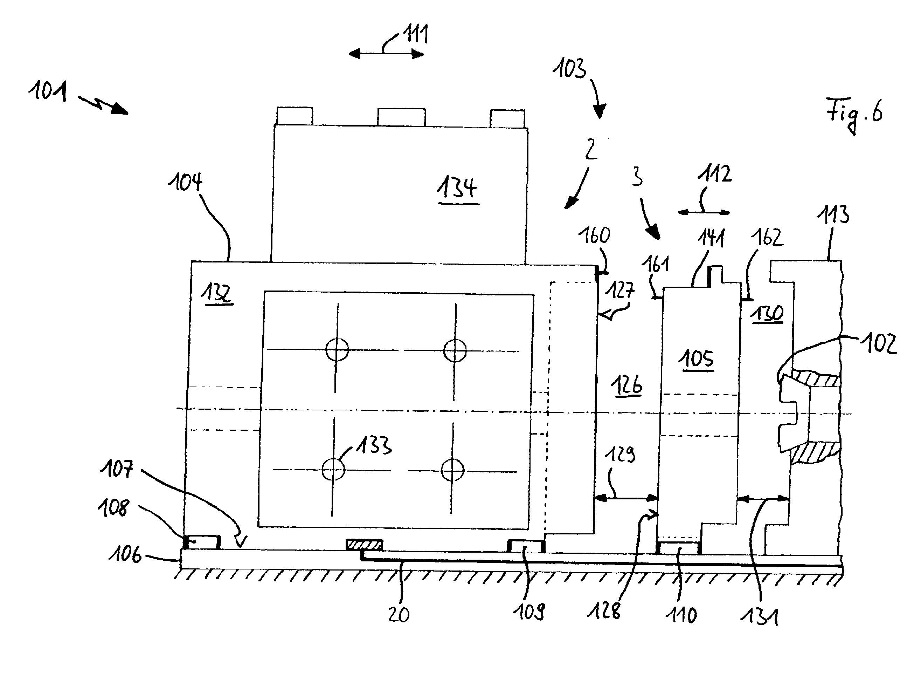

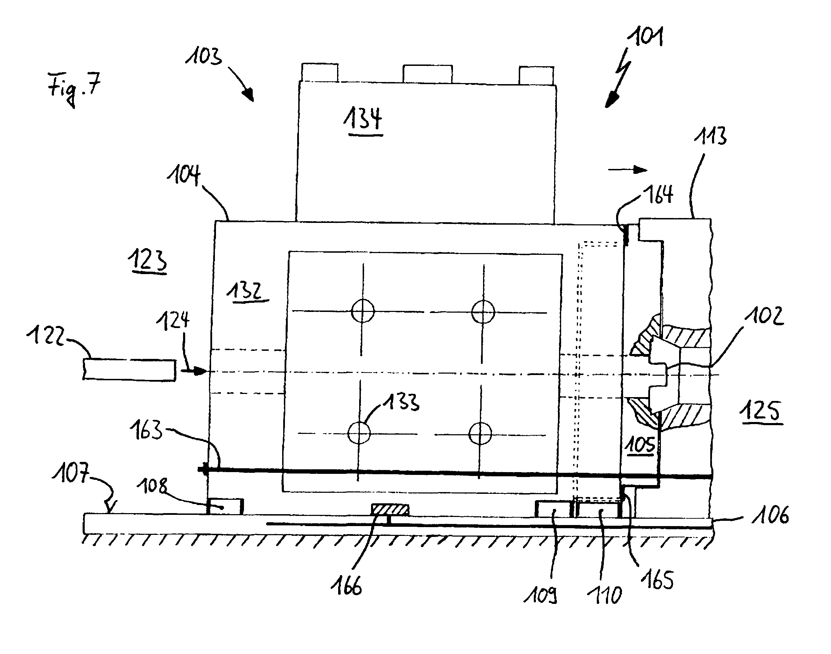

Sowohl die in den Figuren 1 und 2 gezeigte Schälmaschinen 1 als auch die in den Figuren 6 und 7 gezeigte Schälmaschine 101 weisen jeweils im Bereich ihres Schälkopfes 2 bzw. 102 eine Vorschubeinrichtung 3 bzw. 103 auf.

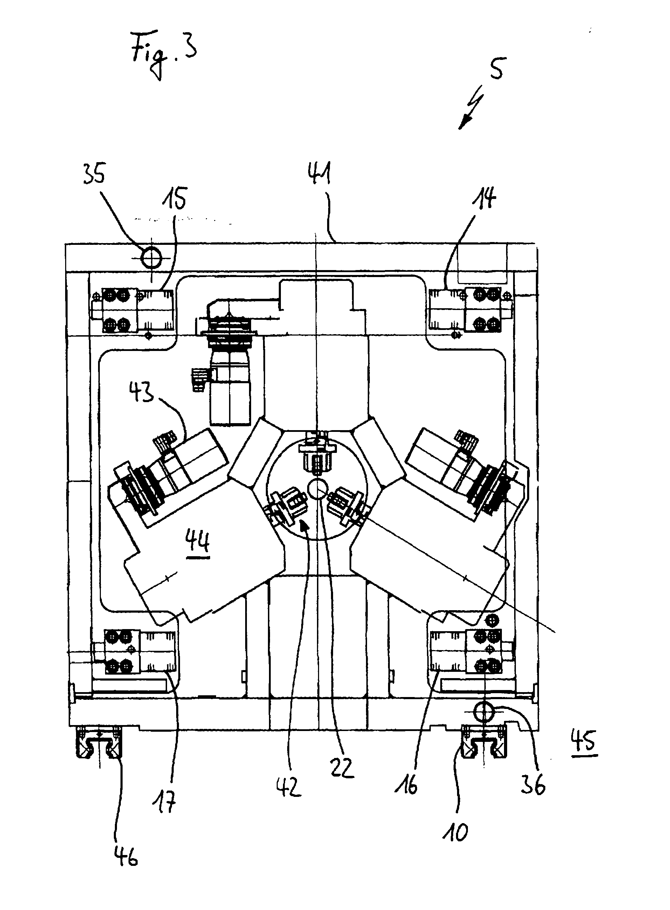

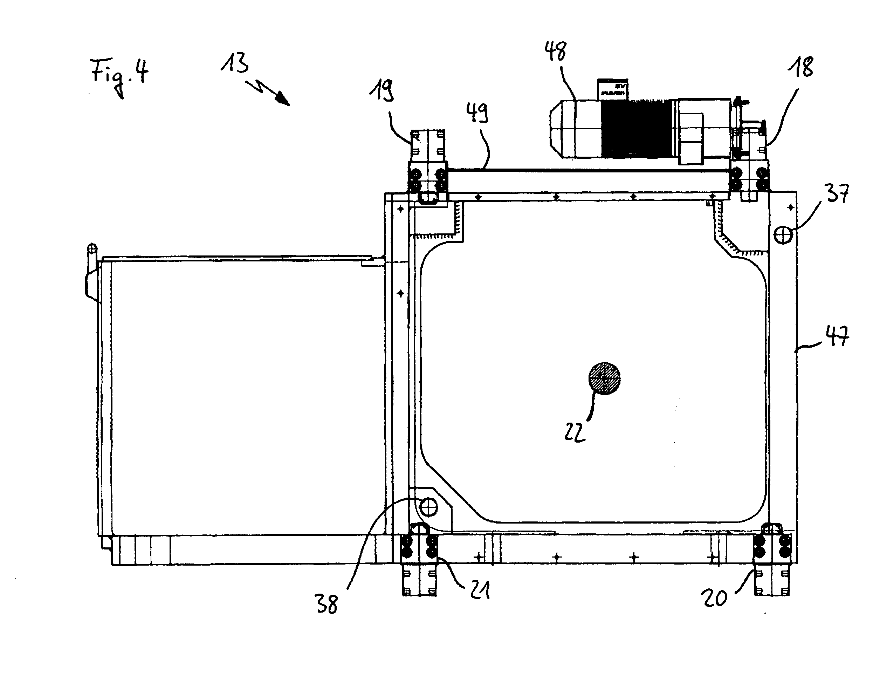

Die in den Figuren 1 und 2 dargestellte Vorschubeinrichtung 3 weist einen Vorschubapparat 4 und eine Einlaufführung 5 auf. Der Vorschubapparat 4 und die Einlaufführung 5 sind auf einer Traverse 6 der Schälmaschine 1 verlagerbar angeordnet, wobei die Traverse 6 eine Linearführung 7 für den Vorschubapparat 4 und die Einlaufführung 5 bildet. Sowohl der Vorschubapparat 4 als auch die Zulaufführung 5 können mittels Laufschuhe 108, 109 und 110 (siehe hierzu Figuren 6 und 7) oder ähnlicher Anordnungen in beiden Richtungen der Pfeile 11 und 12 entlang der Linearführung 7 bewegt werden. Somit kann zum einen der Vorschubapparat 4 und die Einlaufführung 5 einzeln von einem Schälmaschinengetriebe 13 der Schälmaschine 1 weg bewegt bzw. zu dem Schälmaschinengetriebe 13 der Schälmaschine 1 hin bewegt werden. Zum anderen können der Vorschubapparat 4 und die Einlaufführung 5 relativ zueinander bewegt werden. Dies bedeutet, dass der Vorschubapparat 4 auch unabhängig von der Einlaufführung 5 und umgekehrt auf der Traverse 6 bewegt werden kann. Im in der Figur 1 illustrierten Betriebszustand der Schälmaschine 1 ist der Vorschubapparat 4 und die Einlaufführung 5 zu einer kompakten Vorschubeinrichtung 3 miteinander verbunden, und die Vorschubeinrichtung 3 ist darüber hinaus mit der Einlaufführung 5 an das Schälmaschinengetriebe 13 der Schälmaschine 1 verbunden. Damit sowohl der Vorschubapparat 4 als auch die Einlaufführung 5, insbesondere im hier dargestellten Betriebszustand, zuverlässig mit dem Schälmaschinengetriebe 13 verbunden sind, ist zum einen der Vorschubapparat 4 und die Einlaufführung 5 mittels erste obere Keilspannelemente 14 und 15 (siehe auch Figur 3) sowie mittels erste unterer Keilspannelemente 16 und 17 (siehe auch Figur 3) fest aber lösbar miteinander verklemmt. Zum anderen ist die Einlaufführung 5 und das Schälmaschinengetriebe 13 mittels zweite obere Keilspannelemente 18 und 19 (siehe auch Figur 4) sowie mittels zweite untere Keilspannelemente 20 und 21 (siehe auch Figur 4) fest aber lösbar miteinander verklemmt. In diesem verspannten Zustand kann ein Werkstück mittels des Vorschubapparates 4 über die Einlaufführung 5 präzise an den Schälkopf 2 der Schälmaschine 1 geführt werden. Das Werkstück 22 wird hierzu mittels der Vorschubeinrichtung 3 in Pfeilrichtung 24 von einem Einlassbereich 23 durch die Schälmaschine 1 kontinuierlich zu einem Auslassbereich 25 geführt. Der Vorschubapparat 4 ist nach der Darstellung nach Figur 2 derart von der Einlaufführung 5 entfernt verlagert worden, dass zwischen dem Vorschubapparat 4 und der Einlaufführung 5 ein Montageraum 26 entsteht, der sowohl eine gute Zugänglichkeit an dem einlaufführungsseitigen Ende 27 des Vorschubapparates 4 sowie an dem vorschubapparatseitigen Ende 28 der Einlaufführung 5 ermöglicht. Um den Montageraum 26 zu realisieren, ist der Vorschubapparat 4 mit dem Abstand 29 von der Einlaufführung 5 beabstandet.

Darüber hinaus sind bei der Anordnung nach Figur 2 der Vorschubapparat 4 und die Einlaufführung 5 derart weit von dem Schälmaschinengetriebe 13 der Schälmaschine 1 verlagert worden, dass zwischen der Einlaufführung 5 und dem Schälmaschinengetriebe 13 ein weiterer Montageraum 30 bereitgestellt ist. Die Einlaufführung 5 ist dementsprechend um einen Abstand 31 von dem Schälmaschinengetriebe 13 entfernt. Der Vorschubapparat 4 weist einen verwindungssteifen Rahmen 32 auf, in welchem neben den Einlaufrollen 33 (hier nur exemplarisch beziffert) ebenfalls die Antriebs- und Verstellmechanikmechanik 34 der Einlaufrollen 33 angeordnet ist. Darüber hinaus weist die Zulaufführung 5 in diesem Ausführungsbeispiel einen ersten Arretierbolzen 35 und einen zweiten Arretierbolzen 36 (siehe hierzu Figur 3) auf. Das Schälmaschinengetriebe 13 weist ebenfalls einen ersten Arretierbolzen 37 und einen zweiten Arretierbolzen 38 (siehe Figur 4) auf. Der erste Arretierbolzen 35 der Zulaufführung 5 wirkt im Betriebszustand (siehe Figur 1) der Schälmaschine 1 mit einer komplementären Arretierhülse 39 und der zweite Arretierbolzen 36 wirkt im Betriebszustand dementsprechend mit einer komplementären Arretierhülse 40 zusammen. Die Arretierbolzen 35 und 36 sorgen dafür, dass der Rahmen 32 des Vorschubapparates 4 und ein verwindungssteifer Kasten 41 (siehe Figur 3) der Einlaufführung 5 geführt aufeinander zu bewegt werden. Darüber hinaus werden der verwindungssteife Rahmen 32 und der verwindungssteife Kasten 41 durch die Arretierbolzen 35 und 36 zusätzlich zu der Linearführung 6 verdrehsicher zueinander gelagert. Durch die Arretierbolzen 35 und 36 hält die gesamte Vorschubeinrichtung 3 wesentlich robuster und verwindungssteifer zusammen. Gleiches gilt auch hinsichtlich der Arretierbolzen 37 und 38 des Schälmaschinengetriebes 13. Diese wirken mit entsprechenden Arretierhülsen (hier nicht explizit dargestellt) zusammen, die an der Einlaufführung 5 vorgesehen sind. Die Wirkverbindung sei vorliegend nur beispielhaft zwischen dem Vorschubapparat 4 und der Einlaufführung 5 ausführlich beschrieben. Je nach konkreter Ausgestaltung kann eine ausreichende Führung und Fixierung der vorstehend beschriebenen Baugruppen untereinander bereits mit lediglich zwei Arretierbolzen und entsprechenden komplementären Arretierhülsen erreicht werden. Es versteht sich, dass bei weiteren Ausführungsbeispielen jedoch auch mehr als zwei Arretierbolzen und Arretierhülsen Verwendung finden können. In diesem Ausführungsbeispiel weist die Zulaufführung 5 zusätzlich noch Arretierbolzen 14 und 15 auf, die den Vorschubapparat 2 und die Einlaufführung 3 unabhängig von der Spanneinrichtung 13 miteinander vorfixieren. In dem verwindungssteifen Kasten 41 der Einlaufführung 5 sind in diesem Ausführungsbeispiel drei sternförmig zueinander angeordnete Führungsrollen 42 (hier nur exemplarisch beziffert) vorgesehen. Jede dieser Führungsrollen ist vorteilhafter Weise einzeln mittels eines Stellmotors 43 (hier nur exemplarisch beziffert) über ein entsprechendes Stellmotorgetriebe 44 ansteuerbar, so dass das zu schälende Werkstück 22 dem Schälkopf 2 (siehe Figur 3) mit einer äußerst hohen Präzision zugeführt wird. Im unteren Bereich 45 des verwindungssteifen Kastens 41 der Einlaufführung 5 sind ein erster Laufschuh 10 und ein zweiter Laufschuh 46 angeordnet. Über die beiden Laufschuhe 10 und 46 ist die Einlaufführung 5 mit der Linearführung 7 der Schälmaschine 1 translatorisch verlagerbar verbunden.

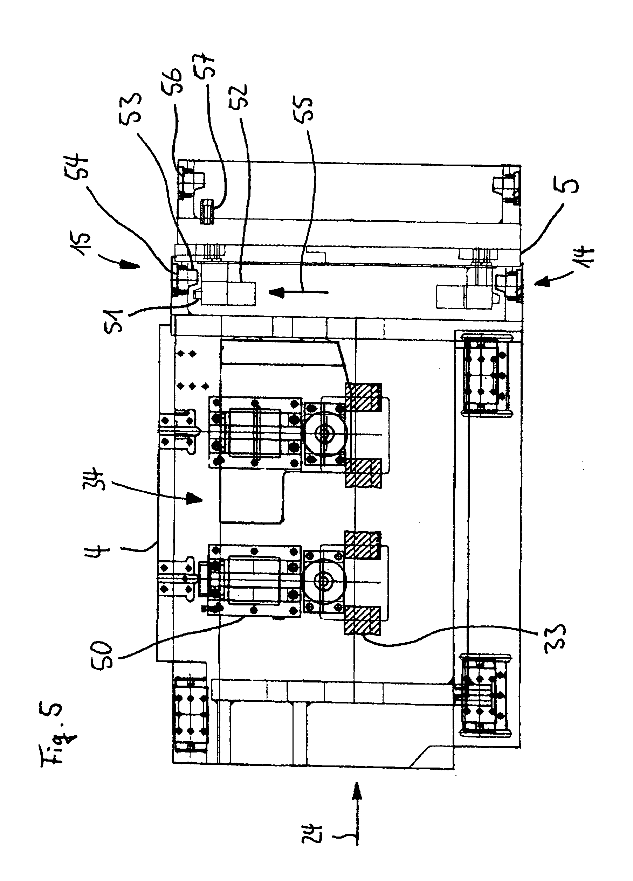

Das Schälmaschinengetriebe 13 (siehe Figur 4) verfügt über ein starres Gehäuse 47, an welchem die zweiten oberen Keilspannelemente 18 und 19 und die zweiten unteren Keilspannelemente 20 und 21 angeordnet sind. Die Keilspannelemente 18, 19, 20 und 21 sind durch einen Antriebsmotor 48 über eine Hydraulikeinrichtung 49 (hier nur zwischen den Keilspannelementen 18 und 19 eingezeichnet) ansteuerbar. An dem starren Gehäuse 47 sind des Weiteren die beiden Arretierbolzen 37 und 38 des Schälmaschinengetriebes 13 angeordnet. Der Aufbau und die Wirkungsweise der an der gesamten Schälmaschine 1 vorhandenen Keilspannelemente 14 bis 21 ist anhand der ersten oberen Keilspannelemente 14 und 15 (siehe Figur 5) gezeigt. Die ersten oberen Keilspannelemente 14, 15 verklemmen zusammen mit den ersten unteren Keilspannelementen 16 und 17 (siehe Figur 3) den Vorschubapparat 4 mit der Einlaufführung 5. Der Vorschubapparat 4 ist in der Darstellung nach der Figur 5 mit seinen zwei oberen Einlaufrollen 33 (nur exemplarisch beziffert, siehe Figur 2) und einem Teil 50 der Antriebs- und Verstellmechanikmechanik 34 (siehe auch Figur 2) gezeigt. Mittels der Einlaufrollen 33 des Vorschubapparates 4 wird das zu schälende Werkstück 22 (siehe Figur 1) dem Schälkopf 2 (siehe Figur 1) in Transportrichtung 24 zugeführt.

Um, wie nach Figur 5 gezeigt, den Vorschubapparat 4 betriebssicher mit der Einlaufführung 5 zu verbinden, greift ein translatorisch beweglicher Verriegelungskeil 51 eines ersten Spannbauteils 52 hinter einen starr fixierten Anschlagkeil 53 eines zweiten Spannbauteils 54. Sowohl das erste Spannbauteil 52 als auch das zweite Spannbauteil 54 sind Komponenten des Keilspannelementes 15, wobei das erste Spannbauteil 52 ein Blockzylinder des Keilspannelementes 15 und das zweite Spannbauteil 54 ein Massivanschlag ist. Das erste Spannbauteil 52 ist in diesem Ausführungsbeispiel an der Einlaufführung 5 und das zweite Spannbauteil 54 ist dementsprechend an dem Vorschubapparat 4 angeordnet. Sind der Vorschubapparat 4 und die Einlaufführung 5, wie nach Figur 5 gezeigt, derart zueinander verfahren, dass beide aneinander grenzen, wird der Verriegelungskeil 51 mittels einer geeigneten Hydraulik 49 (siehe Figur 4) in Pfeilrichtung 55 aus dem Blockzylinder des ersten Spannbauteils 52 herausgefahren. Dabei wirkt der Verriegelungskeil 51 immer inniger mit dem Anschlagkeil 53 des zweiten Spannbauteils 54 zusammen, bis schließlich der Vorschubapparat 4 mit der Einlaufführung 5 fest und betriebssicher verbunden ist. Um die Verbindung zwischen dem Vorschubapparat 4 und der Einlaufführung 5 wieder zu lösen, wird der Verriegelungskeil 51 entgegen der Pfeilrichtung 55 bewegt, so dass die Wirkverbindung zwischen dem Verriegelungskeil 51 und dem Anschlagkeil 53 nach und nach nachlässt und beide Spannbauteile 52 und 54 schließlich vollständig voneinander getrennt sind. Es versteht sich, dass die übrigen Keilspannelemente 14, 16 bis 21 der Schälmaschine 1 über einen identischen Aufbau verfügen, wie beispielhaft an dem Keilspannelement 15 erläutert. Demzufolge entsprechen auch deren Wirkungsweisen derjenigen des vorstehend erläuterten Keilspannelementes 15. Damit die Einlaufführung 5 in gleicher Weise mit dem Schälmaschinengetriebe 13 verbunden werden kann, verfügt die Einlaufführung 5 nicht nur über einerstes Spannbauteil 52 eines Keilspannelementes sondern darüber hinaus auch über ein zweites Spannbauteil 56 des Keilspannelementes 19. Das Keilspannelement 19 ist vorliegend stellvertretend für alle vier Keilspannelemente 18, 19, 20 und 21 gezeigt, die für eine betriebssichere Verbindung zwischen der Einlaufführung 5 und dem Schälmaschinengetriebe 13 vorgesehen sind. Um eine zusätzliche Stabilität zwischen der Einlaufführung 5 und dem Schälmaschinengetriebe 13 zu gewährleisten, weist die Einlaufführung 5 einen zusätzlichen Arretierbolzen 57 auf, der in das starre Gehäuse 47 des Schälmaschinengehäuses 13 hineinreicht, wenn die Einlaufführung 5 und das Schälmaschinengehäuse 13 miteinander verbunden sind.

Die in Figur 6 dargestellte Schälmaschine 101 weist eine Vorschubeinrichtung 103 mit einem Vorschubapparat 104 und eine Einlaufführung 105 auf. Der Vorschubapparat 103 und die Einlaufführung 105 sind auf einer Traverse 106 der Schälmaschine 101 verlagerbar angeordnet, wobei die Traverse 106 eine Linearführung 107 für den Vorschubapparat 104 und der Einlaufführung 105 bildet. Sowohl der Vorschubapparat 104 als auch die Zulaufführung 105 können mittels Laufschuhe 108, 109 und 110 in Pfeilrichtung 111 und 112 entlang der Linearführung 107 bewegt werden. Somit kann zum einen der Vorschubapparat 104 und die Einlaufführung 105 einzeln von dem Schälmaschinengehäuse 113 weg bzw. zu dem Schälmaschinengehäuse 113 hin bewegt werden. Zum anderen können der Vorschubapparat 104 und die Einlaufführung 105 relativ zueinander bewegt werden. Dies bedeutet, dass der Vorschubapparat 104 auch unabhängig von der Einlaufführung 105 und umgekehrt auf der Traverse 106 bewegt werden kann. Der Vorschubapparat 104 ist bei der Anordnung nach Figur 6 derart von der Einlaufführung 105 entfernt verlagert worden, dass zwischen dem Vorschubapparat 104 und der Zulaufführung 105 ein Montageraum 126 entsteht, der sowohl eine gute Zugänglichkeit an dem einlaufführungsseitigen Ende 127 des Vorschubapparates 104 sowie an dem vorschubapparatseitigen Ende 128 der Einlaufführung 105 ermöglicht. Um den Montageraum 126 zu realisieren, ist der Vorschubapparat 104 in einem Abstand 129 von der Einlaufführung 105 beabstandet.

Darüber hinaus sind bei der Anordnung nach Figur 6 der Vorschubapparat 104 und die Einlaufführung 105 derart weit von dem Schälmaschinengetriebe 113 verlagert worden, dass zwischen der Einlaufführung 105 und dem Schälmaschinengetriebe 113 ein weiterer Montageraum 130 bereitgestellt ist. Die Einlaufführung 105 ist dementsprechend um einen Abstand 131 von dem Schälmaschinengetriebe 113 entfernt. Der Vorschubapparat 104 weist einen verwindungssteifen Rahmen 132 auf, in welchem neben den Einlaufrollen 133 (hier nur exemplarisch beziffert) ebenfalls die Antriebs- und Verstellmechanik 134 der Einlaufrollen 133 angeordnet ist. Darüber hinaus weist sowohl der Vorschubapparat 104 als auch die Zulaufführung 105 Indexbolzen 160, 161 und 162 auf, die mit nicht näher dargestellten und bezeichneten, komplementären Hülsen in dem Vorschubapparat 104 bzw. in dem Schälmaschinengetriebe 113 zusammenwirken. Die Indexbolzen 160 und 161 sorgen dafür, dass der Rahmen 132 des Vorschubapparates 104 und ein verwindungssteifer Kasten 141 der Einlaufführung 105 zumindest auf dem letzten Annäherungsabschnitt geführt aufeinander zu bewegt werden. Darüber hinaus werden der verwindungssteife Rahmen 132 und der verwindungssteife Kasten 141 durch die Indexbolzen 160 und 161 zusätzlich zu der Linearführung 107 verdrehsicher zueinander gelagert. Durch die zusätzlichen Indexbolzen 160 und 161 hält die gesamte Vorschubeinrichtung 103 noch robuster zusammen. Der zusätzliche Indexbolzen 162 bewirkt ähnliches zwischen der Einlaufführung 104 und dem Schälmaschinengetriebe 113. Je nach konkreter Ausgestaltung kann eine ausreichende Führung und Fixierung der Baugruppen untereinander bereits lediglich mit einer oder zwei Indexbolzen 160, 161 oder 162 und entsprechende, komplementäre Hülsen erreicht werden. Es versteht sich, dass bei Bedarf aber auch beliebig viele Indexbolzen 160, 161 und 162 vorgesehen werden können.

Im Betriebszustand (siehe Figur 7) ist der Vorschubapparat 104 und die Einlaufführung 105 zu einer Vorschubeinrichtung 103 verbunden, und die Vorschubeinrichtung 103 ist darüber hinaus an das Schälmaschinengetriebe 113 angeordnet. Damit der Vorschubapparat 104 und die Einlaufführung 105, insbesondere im Betriebszustand, zuverlässig mit dem Schälmaschinengetriebe 113 verbunden ist, ist der Vorschubapparat 104, die Einlaufführung 105 und das Schälmaschinengetriebe 113 mittels einer zusätzlichen Spanneinrichtung 163 zu einer kompakten betriebsbereiten Einheit verspannt. In diesem Ausführungsbeispiel weisen der Vorschubapparat 104 und die Zulaufführung 105 zusätzlich noch Rastmittel 164 und 165 auf, die den Vorschubapparat 104 und die Einlaufführung 105 unabhängig von der Spanneinrichtung 163 miteinander vorfixieren. Im verspannten Zustand kann ein Werkstück 22 mittels des Vorschubapparates 104 über die Einlaufführung 105 präzise an einen Schälkopf 102 der Schälmaschine 101 geführt werden. Das Werkstück 122 wird hierzu von einem Einlassbereich 123 in Pfeilrichtung 124 mittels der Vorschubeinrichtung 103 und durch die Schälmaschine 101 kontinuierlich zu einem Auslassbereich 125 geführt. Um den Vorschubapparat 104 und die Einlaufführung 105 zum einen gegeneinander und zum anderen jeweils gegenüber dem Schälmaschinengetriebe 113 zu verlagern, weisen der Vorschubapparat 104 und die Einlaufführung 105 jeweils einen hydraulischen Verstellmechanismus 166 (hier nur exemplarisch beziffert) auf.

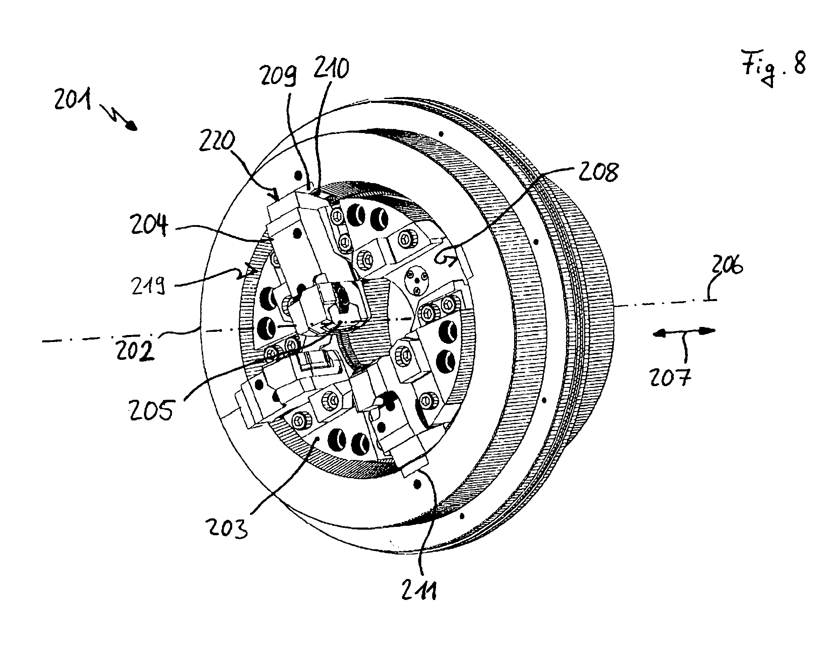

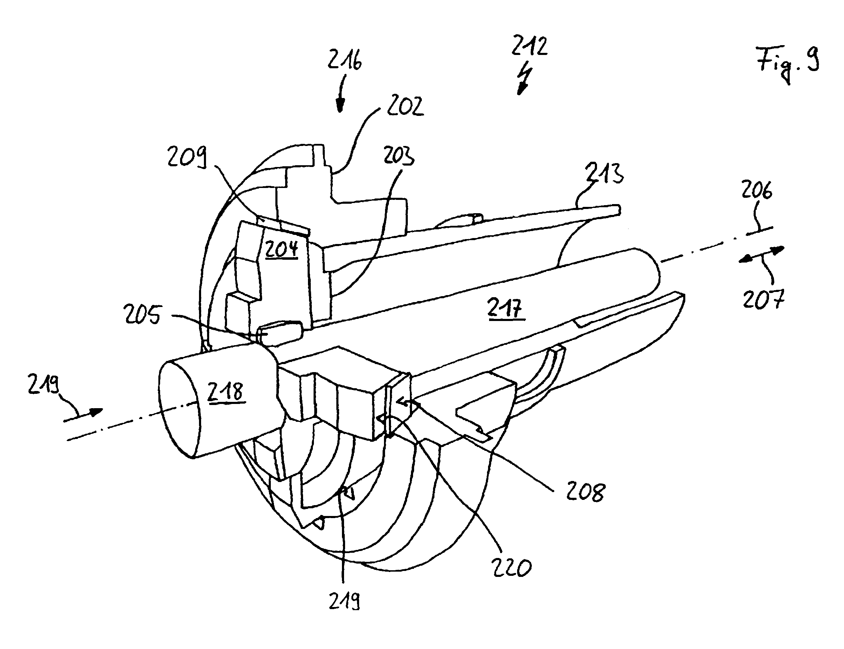

Der in Figur 8 dargestellte Werkzeugkopf 201 besteht im Wesentlichen aus einem Verstellring 202, aus einer Werkzeughalteraufnahme 203 sowie vier an der Werkzeughalteraufnahme 203 angeordnete Werkzeughalter 204 (hier nur exemplarisch beziffert). Die Werkzeughalter 204 weisen jeweils ein Werkzeug 205 (hier nur exemplarisch beziffert) auf, mit welchen ein Werkstück 217 (siehe Figur 9) von einer Zunderschicht 218 (siehe ebenfalls Figur 9) befreit werden oder sonst wie bearbeitet werden kann. Der Werkzeugkopf 201 rotiert beim Bearbeiten des Werkstückes 217 um eine Bearbeitungsachse 206. Die Werkzeughalter 204 werden mittels des Verstellrings 202 radial gegenüber der Bearbeitungsachse 206 angestellt, so dass die Werkzeuge 205 gegenüber dem Werkstück 217 entsprechend angestellt werden können. Die Werkzeughalter 204 sind jeweils derart in der Werkzeughalteraufnahme 203 geführt, dass sie die Werkzeuge 205 gegenüber dem Werkstück 217 bzw. der Bearbeitungsachse 206 radial verlagerbar halten und führen. Das individuelle Einstellen der Werkzeughalter 204 geschieht hierbei durch eine Verlagerung des Verstellrings 202 in axialer Richtung 207, wobei die Verlagerung des Verstellrings 202 dementsprechend axial zu der Bearbeitungsachse 206 verläuft. Die Innenseite 219 des Verstellrings 202 ist an sich konusförmig ausgebildet. Die Werkzeughalter 204 kommunizieren über Gleitflächen 220 mit ebenen Gleitflächen 208 des Verstellrings 202, die in dem konusförmigem Bereich vorgesehen sind. Die Werkzeugaufnahme 203 bleibt beim axialen Verlagern des Verstellrings 202 gegenüber einer Hohlwelle 213 (siehe Figur 9) in der Regel auf der Hohlwelle 213 fixiert, so dass sich der Verstellring 202 relativ zu der Werkzeugaufnahme 203 bewegt. Sowohl die Gleitflächen 220 der Werkzeughalter 204 als auch die mit diesen kommunizierenden Gleitflächen 208 des Verstellrings 202 sind eben ausgeführt, so dass die miteinander kommunizierenden Gleitflächen 220 und 208 möglichst großflächig miteinander in Wechselwirkung treten. Um die ebenen Gleitflächen 208 an der Innenseite 219 des Verstellrings 202 baulich besonders einfach zu realisieren, sind die Gleitflächen 208 in diesem Ausführungsbeispiel durch Inlays 209 realisiert. Die Inlays 209 sind hierbei Hartmetallplättchen, die mittels vier Imbusschrauben 210 (hier nur exemplarisch beziffert) an einer dafür vorgesehenen Nut 211 an der Innenseite 219 des Verstellrings 202 angeordnet sind. Durch die Inlays 209 wird zweierlei umgesetzt. Erstens sind die Inlays 209 derart an der Innenseite 219 des Verstellrings 202 angeordnet, dass sie im Wesentlichen gegenüber der Bearbeitungsachse 206 genauso verlaufen wie die übrige konische Innenseite 219. Zweitens haben die Inlays 209 an ihren Gleitflächen 208 keine gekrümmte Oberfläche, wie der restliche Bereich der Innenseite 219, sondern sind demgegenüber eben, das heißt, ohne Krümmung, ausgeführt. Somit können Werkzeughalter 204 beim axialen Verlagern des Verstellrings 202 entlang der Bearbeitungsachse 206 ohne weiteres radial gegenüber der Bearbeitungsachse 206 verlagert werden und stehen darüber hinaus mit dem Verstellring 202 bzw. der Innenseite 219 des Verstellrings 202 über ebene Gleitflächen 220 und 208 in Wechselwirkung, so dass im Bereich dieser ebenen Gleitflächen 220 und 208, insbesondere radial wirkende Kräfte besser von den Werkzeughaltern 204 auf den Verstellring 202 übertragen werden. Somit unterliegen die Bereiche um bzw. an den Gleitflächen 220 und 208 einen wesentlich geringeren Verschleiß als bei herkömmlichen Werkzeugköpfen 201. Es sei an dieser Stelle noch darauf hingewiesen, dass derartige ebene Gleitflächen 208 nicht nur, wie in diesem Ausführungsbeispiel gezeigt, mittels Inlays 209 realisiert werden können. Es versteht sich, dass derartige ebene Gleitflächen 208 auch unmittelbar an der Innenseite 219 des Verstellrings 202 angearbeitet werden können. Jedoch ist die Verwendung der vorgeschlagenen Inlays 209 besonders wirtschaftlich, da diese Inlays 209 bei Erreichen eines kritischen Verschleißes durch Lösen der Imbussschrauben 210 problemlos ausgewechselt und durch neue Inlays 209 ersetzt werden können. Die Gleitflächen 220 an den Werkzeughaltern 204 sind ohnehin vorteilhaft, da sie wesentlich einfacher an die Werkzeughalter 204 angearbeitet werden können als die bekannten Gleitflächen 220 mit einer konischen Gestalt. Aber auch hier können Inlays 209 vorteilhaft eingesetzt werden, so dass beispielsweise ein an dem Verstellring 202 angeordnetes Inlay 209 mit einem an einem Werkzeughalter 204 angeordneten Inlay 209 kommuniziert.

Der in der Figur 9 illustrierte Werkzeugkopf 212 hat im Wesentlichen einen ähnlichen Aufbau wie der bereits aus der Figur 8 bekannte Werkzeugkopf 201, so dass gleichwirkende Bauteile beider Ausführungsbeispiele im Wesentlichen mit gleichen Bezugsziffer versehen sind. Der Werkzeugkopf 212 hat einen Verstellring 202, der auf einer Hohlwelle 213 in axialer Richtung 207 entlang der Bearbeitungsachse 206 gleiten kann. Darüber hinaus weist die Hohlwelle 213 an ihrem dem Verstellring 202 zugewandten Ende 216 eine Werkzeughalteaufnahme 203 auf, welche die einzelnen Werkzeughalter 204 führt. Die Werkzeughalter 204 weisen an ihren der Bearbeitungsachse 206 zugewandten Seite Werkzeuge 205 auf, mit welchen das Werkstück 217 von seiner Zunderschicht 218 spanend befreit bzw. sonst wie bearbeitet werden kann. Hierzu bewegt sich das Werkstück 217 in Vorschubrichtung 219 entlang der Bearbeitungsachse 206. Zwischen dem Werkzeughalter 204 und dem Verstellring 202 sind Inlays 209 angeordnet und die Inlays 209 haben ebene Gleitflächen 208, so dass die Werkzeughalter 204, die ebenfalls in dem Bereich der ebenen Gleitflächen 208 der Inlays 209 ebene Gleitflächen 220 aufweisen. Somit können die Werkzeughalter 204 über ebene Gleitflächen 220 mit ebenen Gleitflächen 208 des Verstellrings 202 kommunizieren, obwohl die Innenseite 219 des Verstellrings 202 im Übrigen konisch ausgebildet ist.

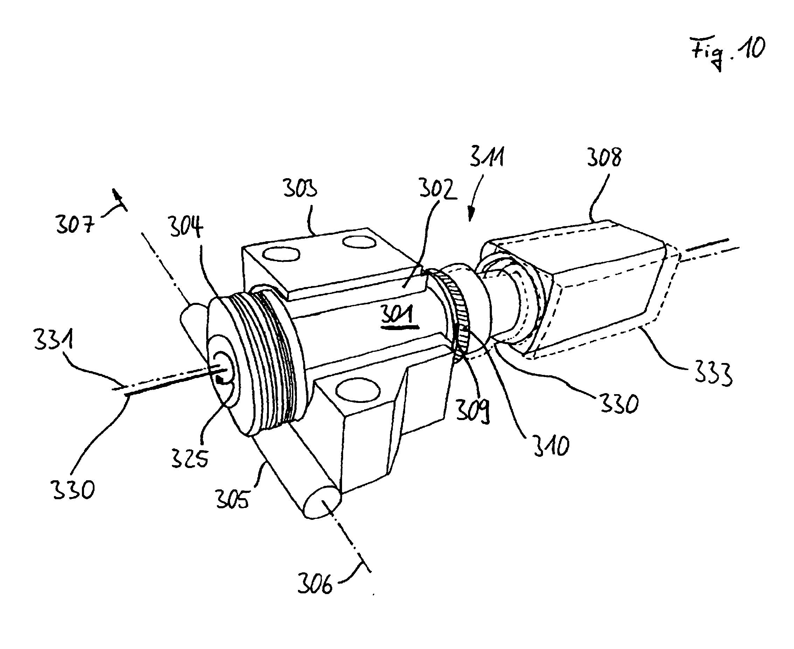

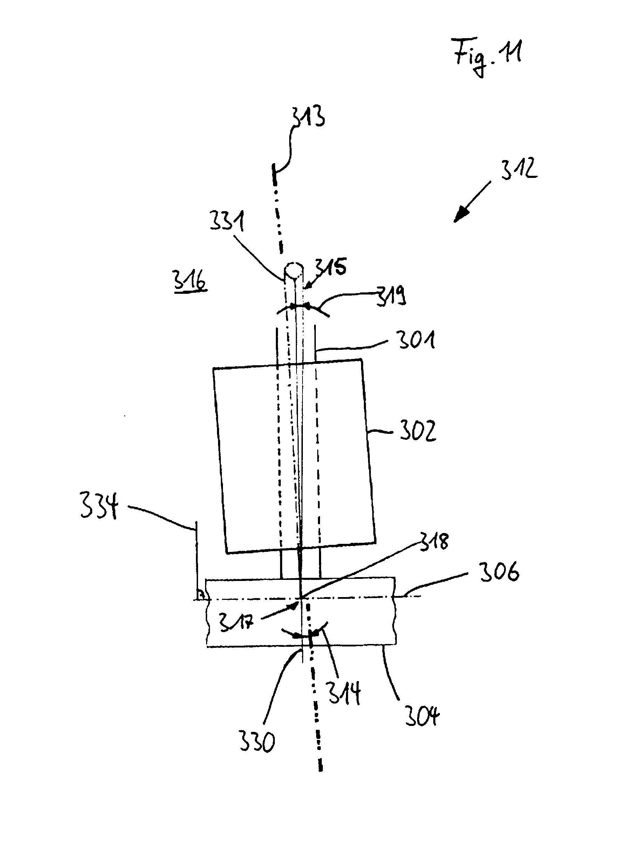

Die Figur 10 zeigt eine Einschubrollenwelle 301, die in einer Lagerbuchse 302 drehbar gelagert ist. Die Lagerbuchse 302 wiederum ist drehbar um eine Rotationsachse 313 (siehe Figur 11) in einer Halterung 303 gelagert. Somit kann nicht nur die Einschubrollenwelle 301, sondern auch die Lagerbuchse 302 gegenüber der Halterung 303 gedreht werden. Darüber hinaus ist es möglich, die Lagerbuchse 302 sowohl gegenüber der Halterung 303 als auch gegenüber der Einschubrollenwelle 301 zu drehen. Ein Drehen der Einschubrollenwelle 301 ist selbst dann möglich, wenn die Lagerbuchse 302 sich nicht gegenüber der Halterung 303 dreht. Die Einschubrollenwelle 301 dreht in einer ersten Ausrichtung um eine Drehachse 330. An einem ersten Ende der Einschubrollenwelle 301 ist eine Einschubrolle 304 angeordnet, die bei Rotation im Uhrzeigersinn 325 ein Werkstück 305 entlang einer Bearbeitungsachse 306 in Pfeilrichtung 307 transportiert. An dem der Einschubrolle 304 entgegengesetzten Ende der Einschubrollenwelle 301 ist ein Antriebsmotor 308 angeordnet, der die Einschubrollenwelle 301 antreibt. Die Lagerbuchse 302 weist einen umlaufenden Ring 309 auf, der mit einer Schrägverzahnung 310 versehen ist. Hierbei ist der Steigerungswinkel der Schrägverzahnung 310 so groß gewählt, dass die Schrägverzahnung 310 eine selbsthemmende Getriebeverzahnung darstellt, welche die Lagerbuchse 302 in einer einmal eingestellten Position so lange beibehält, bis diese Position aktiv verändert wird. Die Einschubrollenwelle 301 ist in der Lagerbuchse 302 schräg angeordnet, so dass sich die erste Drehachse 330 der Einschubrollenwelle 301 bei Rotation der Lagerbuchse 302 in eine weitere Position verschiebt und die Einschubrollenwelle 301 eine weitere Drehachse 331 aufweist, die von der ersten Drehachse 330 der Einschubrollenwelle 301 abweicht. Somit wird die Einschubrolle 304 gegenüber dem Werkstück 305 bzw. gegenüber der Bearbeitungsachse 306 in einem anderen Winkel angestellt. Die hier beispielhaft eingezeichneten zwei unterschiedlichen Positionen, der Drehachsen 330 und 331 stellen nur eine Auswahl von vielen darüber hinausgehenden Positionen dar, welche die Einschubrollenwelle 301 durch das Rotieren der Lagerbuchse 302 um die Rotationsachse 313 einnehmen kann. Um die Möglichkeit eines Verlagerns der Einschubrollenwelle 301 schematisch besser zu veranschaulichen, ist die Einschubrollenwelle 301 im Bereich ihrer Einschubrolle 304 abgewandten Seite 311 strichpunktiert in einer verlagerten Position 332 angedeutet, so dass aus der Figur 10 leichter ersichtlich ist, wie sich die Einschubrollenwelle 301 gegenüber einer ersten Position verlagern kann. Darüber hinaus ist der Antriebsmotor 308 ebenfalls strichpunktiert in einer verlagerten Position 333 dargestellt.

Die in der Figur 11 schematisch abgebildete Ansicht 312 zeigt eine Lagerbuchse 302, in welcher eine Einschubrollenwelle 301 schräg gelagert ist. Die Lagerbuchse 302 rotiert hierbei um eine Rotationsachse 313, wohingegen sich die Einschubrollenwelle 301 an sich um eine Drehachse 330 dreht. Die Rotationsachse 313 der Lagerbuchse 302 ist in einem Winkel 314 gegenüber der Drehachse 330 der Einschubrollenwelle 301 angestellt. Rotiert nun die Lagerbuchse 302 um ihre Rotationsachse 313, verlagert sich die Drehachse 330 der in der Lagerbuchse 302 schräg angeordneten Einschubrollenwelle 301 derart, dass die Drehachse 330 virtuell einen Kegel 315 in den Raum 316 schreibt, und der Kegel 315 eine Spitze 317 aufweist, die in einem Schnittpunkt 318 der Einschubrollenwellenebene, in welcher die Einschubrollenwellenachse 330 liegt und die senkrecht zur Bildebene und somit parallel zur Hauptandruckrichtung der Einschubrolle 304 auf das Werkstück 305 ausgerichtet ist, und der Bearbeitungsachse 306 ihren Ursprung hat. Die Einschubwellenebene erstreckt sich schräg bezüglich der zu der Bearbeitungsebene 306 angeordneten Senkrechten 334. Hierdurch kann die Einschubrolle 304 auf baulich einfache Weise in unterschiedlichen Winkeln gegenüber der Bearbeitungsachse 306 und dementsprechend auch gegenüber einem Werkstück 305 eingestellt werden. Mittels dieser Anordnung ist es möglich, die Drehachse 330 der Einschubrollenwelle 301 zwischen 0° und 1,25° zu verlagern und hierdurch eine ausreichende Anstellung der Einschubrolle 304 gegenüber dem Werkstück 305 zu erreichen. Somit kann die Einschubrolle 304 an die wechselnden Erfordernisse unterschiedlicher Durchmesser der Werkstücke 305 angepasst werden. Die Anordnung ermöglicht es unter anderem auch, die entsprechenden Winkel äußerst fein und präzise anzustellen.

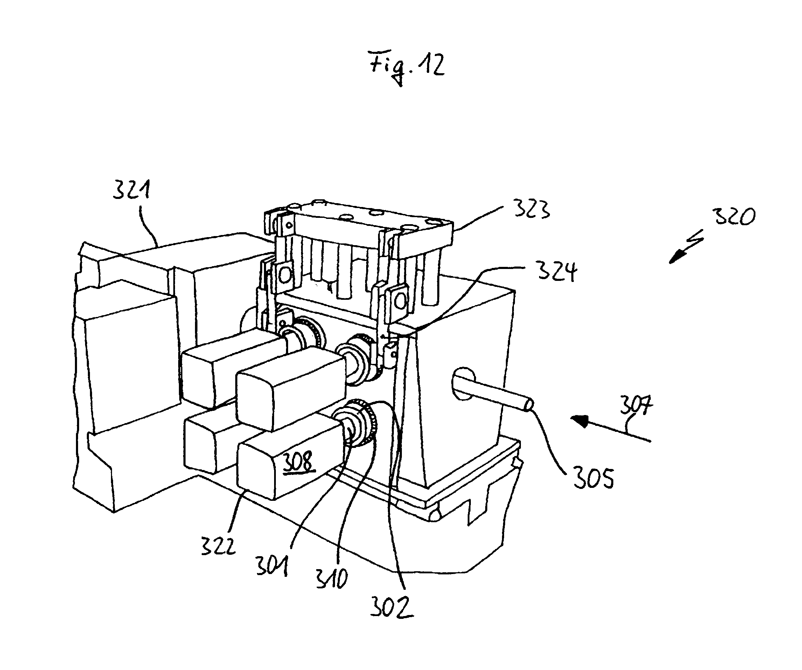

Der in der Figur 12 gezeigte Vorschubapparat 320 ist Teil einer Schälmaschine 321 (hier nur im Hintergrund angedeutet) und weist vier Einstellmechaniken 322 (nur exemplarisch beziffert) auf, wobei die Einstellmechaniken 322 jeweils eine Lagerbuchse 302 (siehe Figuren 10 und 11) mit einer darin schräg angeordneten Einschubrollenwelle 301 (siehe Figuren 10 und 11) aufweisen. Neben den Einstellmechaniken 322 können zusätzlich noch Spanneinrichtungen vorgesehen sein, mittels welcher die Einschubrollen parallel zu ihrer Hauptandruckrichtung auf das Werkstück zu verlagert bzw. angestellt werden können, um ihren Abstand an den jeweiligen Werkstückdurchmesser geeignet anpassen zu können. Die vier an dem Vorschubapparat 320 angeordneten Einschubrollen 304 (siehe Figuren 10 und 11) transportieren das Werkstück 305 in Förderrichtung 307 zu der Schälmaschine 321, mit welcher in diesem Ausführungsbeispiel beispielsweise eine Zunderschicht (hier nicht dargestellt) von dem Werkstück 305 entfernt wird, wobei das Werkstück 306 im Anschluss an den Schälvorgang dann eine metallisch blanke Oberfläche (hier nicht dargestellt) aufweist. Im oberen Bereich des Vorschubapparates 320 befindet sich eine Antriebs- und Einstelleinheit 323, die mittels einer Stellmechanik 324 jeweils auf die Schrägverzahnung 310 des umlaufenden Ringes 309 (siehe Figur 10) wirkt, sodass die Lagerbuchse 302 hierbei in eine gewünschte Position eingestellt werden kann.

## Patentansprüche

1. Vorschubapparat (320) mit Einschubrollen (304) zum Beschleunigen von linearen Werkstücken (306), insbesondere von Stäben, Rohren, Stangen, Drähten, Kabeln oder ähnlichem, entlang einer Bearbeitungsachse (306) einer Förderstrecke, bei welchem die Einschubrollen (304) jeweils mittels einer Einschubrollenwelle (301) angetrieben sind, ***dadurch gekennzeichnet, dass*** wenigstens eine Einschubrollenwelle (301) exzentrisch in einer Wellenaufnahme (302) gelagert ist.

2. Vorschubapparat nach Anspruch 1, ***dadurch gekennzeichnet, dass*** die Wellenaufnahme (302) um eine Wellenaufnahmenachse (313) drehbar gelagert ist.

3. Vorschubapparat nach Anspruch 2, ***dadurch gekennzeichnet, dass*** die Wellenaufnahme (302) eine Lagerbuchse ist und die Lagerbuchse rotierbar um eine ihrer Längsachsen, vorzugsweise um ihre mittlere Längsachse, in einer Halterung (303) angeordnet ist.

4. Vorschubapparat nach einem der Ansprüche 2 und 1, ***dadurch gekennzeichnet, dass*** die Drehachse (330) der Einschubrollenwelle (301) gegenüber der Rotationsachse (313) der Wellenaufnahme (302) derart angeordnet ist, dass bei einer Rotation der Wellenaufnahme (302) die Drehachse (330) der Einschubrollenwelle (301) einen Kegel (315) im Raum (316) beschreibt.

5. Vorschubapparat nach Anspruch 4, ***dadurch gekennzeichnet, dass*** der Kegel (315) eine Spitze (317) aufweist, die sich im Wesentlichen in einem Schnittpunkt (318) der Drehachse (330) der Einschubrollenwelle (301) und einer Senkrechten (334) der Bearbeitungsebene, vorzugsweise sich im Wesentlichen in einem Schnittpunkt (318) der Drehachse (330) der Einschubrollenwelle (301) und der Bearbeitungsebene, befindet.

6. Vorschubapparat nach einem der Ansprüche 2 bis 5, ***dadurch gekennzeichnet, dass*** die Drehachse (330) der Einschubrollenwelle (301) und die Rotationsachse (313) der Wellenaufnahme (302) einen Winkel (314) miteinander einschließen.

7. Vorschubapparat nach einem der Ansprüche 2 bis 6, ***dadurch gekennzeichnet, dass*** die Rotationsachse (313) der Wellenaufnahme (302) schräg zu einer Senkrechten (334) der Bearbeitungsachse (306) der Förderstrecke angeordnet ist.

8. Vorschubapparat nach einem der Ansprüche 2 bis 7, ***dadurch gekennzeichnet, dass*** die Wellenaufnahme (302) eine Bohrung zur Aufnahme einer Einschubrollenwelle (301) aufweist und die Bohrung schräg zu der Rotationsachse (313) der Wellenaufnahme (302) angeordnet ist.

9. Vorschubapparat nach einem der Ansprüche 2 bis 8, ***dadurch gekennzeichnet, dass*** die Wellenaufnahme (302) eine Bohrung aufweist, deren Eingangs- und Ausgangsöffnung unterschiedliche Abstände zu der Rotationsachse (313) der Wellenaufnahme (302) aufweisen.

10. Vorschubapparat nach einem der Ansprüche 8 oder 9, ***dadurch gekennzeichnet, dass*** eine Öffnung der Bohrung der Wellenaufnahme (302) an der der Einschubrollen (304) zugewandten Stirnseite der Wellenaufnahme (302) näher an der Rotationsachse (313) der Wellenaufnahme (302) angeordnet ist als eine Öffnung der Bohrung an der der Einschubrollen (304) abgewandten Stirnseite der Wellenaufnahme (302).

11. Vorschubapparat nach einem der Ansprüche 1 bis 10, ***dadurch gekennzeichnet, dass*** die Wellenaufnahme (302) einen selbsthemmenden Antrieb aufweist.

12. Vorschubapparat nach Anspruch 11, ***dadurch gekennzeichnet, dass*** der selbsthemmende Antrieb ein selbsthemmendes Schraubengetriebe bzw. Schneckegetriebe und/oder einen hydraulischen Stellmotor aufweist.

13. Vorschubapparat nach einem der Ansprüche 1 bis 12, ***dadurch gekennzeichnet, dass*** ein Lagerkörper mit einer Lagerung für die Einschubrollenwelle (301) derart an einer Halterung geführt ist, dass die Lagerung der Einschubrollenwelle eine Bewegung mit einer Rotationskomponente um eine Komponentenachse ausführt, die in einer Ebene liegt, die parallel zum Werkstück (306) angeordnet ist und von der Hauptandruckrichtung, in welcher die jeweilige Einschubrolle auf das Werkstück wirkt, durchstoßen wird.

14. Maschine, insbesondere Schälmaschine, zum Bearbeiten von linearen Werkstücken (22), insbesondere von Stäben, Rohren, Stangen, Drähten, Kabeln oder ähnlichem, mit einer Vorschubeinrichtung (3; 103), die einen trennbar mit einer Einlaufführung (5; 105) verbundenen Vorschubapparat (4; 104) aufweist, ***dadurch gekennzeichnet, dass*** der Vorschubapparat (4; 104) und die Einlaufführung (5; 105) mittels wenigstens einer Schnellspanneinrichtung trennbar miteinander verbunden sind.

15. Maschine nach Anspruch 14, ***dadurch gekennzeichnet, dass*** die Schnellspanneinrichtung wenigstens ein Keilspannelement (14) aufweist.

16. Maschine nach einem der Ansprüche 14 bis 15, ***dadurch gekennzeichnet, dass*** der Vorschubapparat (4; 104) und die Einlaufführung (5; 105), insbesondere auch im Einbauzustand, relativ zueinander verlagerbar sind.

17. Maschine nach einem der Ansprüche 14bis 16, ***dadurch gekennzeichnet, dass*** der Vorschubapparat (4; 104) und die Einlaufführung (5; 105) mittels einer Spanneinrichtung (163) lösbar miteinander fixiert sind.

18. Maschine nach einem der Ansprüche 14 bis 17, ***dadurch gekennzeichnet, dass*** sowohl der Vorschubapparat (4; 104) als auch die Einlaufführung (5; 105) entlang einer Linearführung (7; 107) verfahrbar gelagert sind.

19. Maschine nach einem der Ansprüche 14 bis 18, ***dadurch gekennzeichnet, dass*** der Vorschubapparat (4; 104) einen verwindungssteifen Rahmen (32; 132) aufweist, der vorzugsweise über Laufschuhe (10, 46; 108, 109, 110) mit einer Linearführung (7; 107) kommuniziert.
